## Europäisches Patentamt
## European Patent Office
## Office européen des brevets

(19)

(11) Numéro de publication: **0 1 1 3 6 1 6 B1**

(12) # FASCICULE DE BREVET EUROPEEN

(45) Date de publication du fascicule du brevet:
**19.11.87**

(51) Int. Cl.⁴: **B 64 C 25/52**

(21) Numéro de dépôt: **83402366.5**

(22) Date de dépôt: **07.12.83**

(54) **Trains d'atterrissage à patins équipés de composants munis d'un dispositif d'absorption d'énergie par déformation plastique et/ou de limitation d'effort.**

(30) Priorité: **08.12.82 FR 8220549**

(43) Date de publication de la demande:
**18.07.84 Bulletin 84/29**

(45) Mention de la délivrance du brevet:
**19.11.87 Bulletin 87/47**

(84) Etats contractants désignés:
**DE GB IT**

(56) Documents cités:
**EP - A - 0 072 323**
**FR - A - 1 578 594**
**FR - A - 2 346 216**
**FR - A - 2 425 584**
**US - A - 3 716 208**

(73) Titulaire: **AEROSPATIALE Société Nationale Industrielle, 37, Boulevard de Montmorency, F-75781 Paris Cédex 16 (FR)**

(72) Inventeur: **Mens, Jacques Michel Norbert, Chemin du Carestier, F-13700 Marignane (FR)**
Inventeur: **Barnoin, Pierre, Les Blanoirs, F-13510 Eguilles (FR)**
Inventeur: **Martin, Michel Jean Louis, 7 rue Beethoven, F-13960 Sausset les Pins (FR)**

(74) Mandataire: **Lepeudry-Gautherat, Thérèse et al, ARMENGAUD JEUNE CABINET LEPEUDRY 6, rue du Fg. St-Honoré, F-75008 Paris (FR)**

## Description

La présente invention concerne des trains d'atterrissage à patins, équipés de composants munis d'un dispositif d'absorption d'énergie par déformation plastique et/ou de limitation d'effort, ainsi que des composants de ce type.

Plus particulièrement, l'invention a pour objet des trains d'atterrissage à patins destinés à l'équipement des hélicoptères, et comportant des composants mécaniques, tels que des contre-fiches, et éventuellement également hydrauliques, tels que des vérins, amortisseurs, et amortisseurs-vérins spécialement aménagés afin de présenter une capacité communément désignée par les termes d'«anti-crash».

Par le brevet français n° 1 549 884 et son certificat d'addition n° 2 010 302, on connaît déjà des dispositifs d'absorption d'énergie par déformation plastique et de limitation d'effort, comprenant des éléments de roulement, tels que des billes ou des galets, disposés entre deux organes télescopiques, de telle façon que lors d'un choc provoquant un déplacement télescopique des deux organes, les éléments de roulement provoquent une déformation plastique progressive de l'un au moins des deux organes télescopiques, du fait que les éléments de roulement sont serrés entre les organes télescopiques et sont réalisés en un matériau plus dur que le matériau constituant au moins l'organe qui se déforme, et dans lequel les éléments de roulement forment des rainures.

Selon le certificat d'addition précité, les éléments de roulement sont maintenus en des positions prédéterminées dans des perforations ménagées dans un manchon, monté coaxialement entre les organes télescopiques, de forme générale cylindrique, et adapté pour se déplacer avec ces éléments de roulement et pour maintenir un espacement prédéterminé entre eux pendant leur roulement résultant d'un déplacement relatif des organes télescopiques, de sorte que ce manchon fasse office de cage pour les éléments de roulement.

Dans ces dispositifs, le montage des éléments de roulement serrés entre les organes télescopiques est choisi pour charger en compression ces éléments de roulement entre des portions, le plus souvent cylindriques, des organes télescopiques, de telle sorte que ces éléments de roulement exercent, dans la zone de contact avec les organes télescopiques, une pression de contact moyenne de valeur supérieure à la pression de contact de déformation pour le matériau constituant au moins l'organe télescopique déformable, c'est-à-dire à la pression pour laquelle s'établit une répartition des contraintes menant à une déformation plastique dans la zone de contact, cette déformation plastique produisant une dissipation d'énergie élevée et localisée.

La valeur de la dissipation d'énergie par unité de déplacement des organes télescopiques dépend du degré ou de la profondeur de la déformation plastique, qui elle-même dépend de la charge des éléments de roulement, c'est-à-dire de leur nombre, du degré de serrage, défini à partir de la valeur dont la dimension radiale ou diamètre des éléments de roulement est supérieure à la différence entre les dimensions radiales ou rayons externe et interne des organes télescopiques dans la zone de contact avec déformation. Cette valeur de la dissipation d'énergie dépend également des duretés relatives des matériaux constituant les éléments de roulement et les organes télescopiques.

L'utilisation de tels dispositifs fournit des caractéristiques d'absorption d'énergie pouvant être prévues avec une grande précision. On peut ainsi obtenir une absorption constante le long de la course des organes télescopiques, si l'épaisseur de ces derniers et le degré de serrage sont maintenus constants. Il est également possible que l'un des organes télescopiques voire les deux, soit réalisé avec une dimension interne ou externe qui varie de façon continue, de manière à obtenir une pièce convergente ou divergente par exemple de sorte que les éléments de roulement recontrent une résistance respectivement croissante ou décroissante lors d'un déplacement télescopique des organes. De même, l'épaisseur de paroi de l'un des deux organes peut varier le long de ces derniers pour présenter une résistance variable à la déformation plastique.

Dans les brevets précités ainsi que dans le brevet britannique n° 1 195 445 et dans le brevet français n° 2 085 498, qui décrivent des dispositifs d'absorption d'énergie analogues, ces dispositifs équipent des colonnes de direction de véhicules, alors qu'un dispositif analogue faisant l'objet du brevet allemand n° 2 918 179 est destiné à l'équipement des ceintures de sécurité de véhicules.

Par la demande de brevet français n° 8 115 432 du 10 août 1981 (FR-A-2 511 103, publiée le 11.2.1983), au nom de la Demanderesse, on s'est déjà proposé d'adapter des mécanismes d'absorption d'énergie par déformation plastique, du type de ceux décrits dans les brevets précités, dans des composants remplissant une fonction principale hydraulique et/ou mécanique, tels qu'un vérin de manœuvre et/ou de contreventement ou un amortisseur oléopneumatique, qui constitue déjà par lui-même un dispositif d'absorption et de dissipation d'énergie, ou une contre-fiche de contreventement d'un élément principal, de sorte que ces composants puissent remplir une fonction supplémentaire d'absorption d'énergie et/ou de limitation d'effort, dans un but de sécurité et de protection d'une structure à laquelle ils sont associés, et comprenant des parties auxquelles des efforts violents, résultant de choc et d'àcoups portés sur la structure, ne doivent pas être transmis sans amortissement, atténuation ou limitation.

Il en est ainsi des aérodynes, dont les cellules doivent être, autant que possible, protégées en cas d'accident, afin d'assurer au minimum la survie des personnels embarqués, et, éventuellement aussi, la préservation de la majeure partie de l'aérodyne, et tout comme la demande précitée, l'invention a également pour but de concevoir des trains d'atterrissage d'aérodynes, en particulier des trains à patins d'hélicoptères, équipés de composants selon la demande précitée ou propres à l'invention, et présentant une capacité «anti-crash».

A cet effet, un composant selon la demande précitée remplissant une fonction principale hydraulique et/ou mécanique, du type vérin, amortisseur ou contre-fiche, et comprenant un élément tubulaire, à l'intérieur duquel est reçu un élément télescopique immobilisé vis-à-vis de l'élément tubulaire dans au moins une position d'utilisation par au moins un dispositif de verrouillage, comprend également un dispositif d'absorption d'énergie par déformation plastique et/ou de limitation d'effort, comportant un ensemble d'éléments de roulement maintenu par une cage et interposé avec serrage entre deux organes susceptibles de coulisser l'un dans l'autre après rupture d'un élément frangible à charge de rupture prédéterminée, de sorte que les éléments de roulement provoquent, par déformation plastique de l'un au moins des deux organes, à charge de déformation plastique prédéterminée, une dissipation d'énergie, de façon en soi connue, l'élément frangible à charge de rupture prédéterminée étant compris dans le dispositif de verrouillage immobilisant dans une position d'utilisation l'élément télescopique, qui constitue l'organe interne non déformable plastiquement du dispositif d'absorption d'énergie, à l'intérieur de l'élément tubulaire dont est solidaire l'organe externe déformable plastiquement du dispositif d'absorption d'énergie, et la cage des éléments de roulement étant entraînée par l'élément télescopique.

Selon la demande précitée, l'organe externe déformable plastiquement est constitué soit par l'élément tubulaire lui-même, soit par un fourreau, doublant l'élément tubulaire à l'intérieur de ce dernier, sur au moins une partie de sa longueur, avec un jeu radial suffisant pour admettre la déformation plastique provoquée par les éléments de roulement, et amovible pour permettre la remise en état du composant par remplacement du fourreau et d'au moins l'élément frangible.

Selon la demande précitée, l'élément tubulaire peut être constitué par le corps, de forme générale cylindrique, d'une contre-fiche comprenant également une tige, constituant l'élément télescopique, montée coulissante dans le corps et immobilisée vis-à-vis de ce dernier dans une position initiale dans laquelle une partie de la tige pénètre dans le corps, au moyen d'au moins un boulon à tige partiellement filetée, vissé dans un taraudage radial traversant le corps à son extrémité traversée par la tige, et tel que l'extrémité de la tige du boulon pénètre dans un perçage radial de la tige de contre-fiche et constitue simultanément le dispositif de verrouillage et l'élément frangible à charge de rupture prédéterminée, la cage de retenue des éléments de roulement étant solidarisée sur l'extérieur de la partie de la tige interne au corps et les éléments de roulement étant en appui radial vers l'intérieur contre la tige et vers l'extérieur dans une empreinte de l'organe déformable plastiquement, constitué soit par le corps, soit par le fourreau retenu par la tige partiellement filetée du ou des boulons contre la paroi interne du corps à l'extrémité de ce dernier traversée par la tige de la contre-fiche.

Selon que la tige de la contre-fiche est rigidement liée au corps respectivement en position rentrée, en position à demi-rentrée et en position sortie, le dispositif d'absorption d'énergie par déformation plastique de la contre-fiche peut être utilisé dans les cas d'une sollicitation supérieure au seuil de rupture de l'élément frangible respectivement en traction seulement, en traction ou en compression, et en compression seulement.

Selon la demande précitée, l'élément tubulaire peut encore être constitué par le cylindre d'un vérin hydraulique, comprenant une tige constituant l'élément télescopique, montée coulissante dans le cylindre et guidée dans ce dernier par un piston porté à son extrémité interne au cylindre, la tige du vérin étant immobilisée dans le cylindre dans au moins une position d'utilisation normale du vérin par un dispositif de verrouillage à griffes élastiques dont les têtes sont bloquées contre un redan sur la paroi interne du cylindre par au moins un piston de verrouillage, et dont les pieds sont solidaires d'un talon radial, constituant l'élément frangible à charge de rupture prédéterminée, et présentant une couronne extérieure entraînée par la tige de vérin en même temps que la cage des éléments de roulement portée autour de l'extrémité de la tige interne au cylindre de vérin.

Dans une forme de réalisation préférée du vérin selon la demande précitée, les éléments de roulement sont retenus radialement vers l'intérieur par un anneau monté coulissant entre la cage retenant les éléments de roulement et la tige de vérin, et présentant sur sa face extérieure une gorge servant au logement des éléments de roulement, en position d'utilisation du vérin, et se raccordant par une rampe inclinée à une portion cylindrique, l'anneau étant sollicité élastiquement vers la couronne extérieure de l'élément frangible pour provoquer, à la suite de la rupture de ce dernier, la sortie des éléments de roulement de la gorge et leur déplacement sur la rampe inclinée puis sur la position cylindrique de l'anneau, lors d'un déplacement relatif de la cage entraînant les éléments de roulement et entraînée par la tige vis-à-vis de l'anneau, maintenu en butée contre la couronne extérieure de l'élément frangible avant que d'être entraîné avec la tige par la couronne intérieure de l'élément frangible, de sorte que les éléments de roulement sont déplacés radialement vers l'extérieur, en saillie par rapport à la cage, et sont susceptibles de provoquer des déformations plastiques de l'organe à charge de déformation plastique prédéterminée.

Selon la demande précitée, et dans le cas où l'organe déformable plastiquement est le cylindre du vérin lui-même, un chambrage est prévu à l'extrémité du cylindre entourant la cage, les éléments de roulement et l'anneau, en position d'utilisation normale du vérin, et s'étend axialement sur une distane autorisant la venue des éléments de roulement en saillie par rapport à la cage, à la suite de la rupture de l'élément frangible et d'un déplacement initial de la tige dans le cylindre du vérin.

Dans le cas où l'absorption d'énergie désirée conduit à une définition du cylindre du vérin incompatible avec sa fonction normale, celui-ci peut être doublé par un fourreau interne déformable, monté avec un jeu radial suffisant pour admettre la déformation provoquée par les éléments de roulement.

Selon que l'élément frangible appartient au dispositif de verrouillage immobilisant la tige vis-à-vis du cylindre de vérin respectivement en position rentrée ou en position sortie, le dispositif d'absorption d'énergie par déformation plastique et /ou de limitation d'effort du vérin est sollicité respectivement en traction ou en compression par un effort qui peut être inférieur, égal ou supérieur au seuil de rupture de l'élément frangible.

Selon la demande précitée, l'élément tubulaire du composant peut également être constitué par le corps, présentant au moins une partie de forme générale cylindrique, d'un amortisseur comprenant également un cylindre, constituant l'élément télescopique, au moins partiellement logé dans la partie générale cylindrique du corps, et immobilisé en position d'utilisation dans ce corps par au moins un boulon à tige partiellement filetée traversant un alésage radial ménagé dans le corps et vissée dans un talon radial du cylindre, de façon à constituer simultanément le dispositif de verrouillage et l'élément frangible, une tige d'amortisseur étant montée coulissante avec étanchéité dans le cylindre de l'amortisseur, qui renferme de plus un dispositif élastique d'absorption d'énergie, susceptible de rappeler la tige en position initiale dans le cylindre, ainsi qu'un dispositif de dissipation d'énergie par laminage d'un volume d'huile hydraulique déplacé dans l'amortisseur par tout déplacement relatif de la tige et du cylindre.

Dans une forme préférée de réalisation, le talon radial externe, dans lequel est vissée l'extrémité filetée de la tige du ou des boulons, constitue simultanément la cage des éléments de roulement, retenue sur la paroi externe du cylindre de l'amortisseur. De préférence, les éléments de roulement sont en appui radial vers l'intérieur dans une gorge pratiquée sur la paroi externe du cylindre, et la cage, en position fixe par rapport à cette gorge, amène les éléments de roulement à coopérer avec l'organe déformable plastiquement constitué, dans ce cas également, soit par le corps de l'amortisseur lui-même, soit par un fourreau retenu par au moins le ou les boulons contre la paroi interne du corps.

On sait qu'en cas de choc ou d'impact à vitesse élevée sur un amortisseur, le laminage n'est plus possible et la tige est bloquée dans le corps de l'amortisseur. En conséquence, on choisit selon la demande précitée un seuil de déclenchement du dispositif d'absorption d'énergie par déformation plastique de l'amortisseur qui est supérieur aux efforts subis par l'amortisseur dans des conditions de fonctionnement normales mais inférieur à un effort qui endommagerait la structure supportée par l'amortisseur en case de blocage de la tige dans le cylindre de ce dernier.

Les composants selon la demande précitée présentent l'avantage que la course utile de leurs dispositifs d'absorption d'énergie par déformation plastique et/ou de limitation d'effort est la même que celle de leur tige lorsque ces composants remplissent leur fonction principale, tout en ayant les avantages d'un montage en série. La longueur d'un composant selon l'invention n'est donc pas modifiée par l'adjonction de la fonction supplémentaire d'absorption d'énergie et/ou de limitation d'effort par rapport aux composants analogues de l'art antérieur.

Par ailleurs, on connaît déjà par US-A-3 716 208 un train d'atterrissage à patins pour hélicoptère, du type comprenant deux atterrisseurs fixés à la structure de l'hélicoptère, et dont chacun comporte un patin relié à ladite structure par deux traverses, dont l'une est, pour chaque atterrisseur, articulée sur la structure autour d'un axe, et un dispositif d'absorption d'énergie et/ou de limitation d'effort qui est relié d'une part à une traverse de chaque atterrisseur.

Dans cette réalisation connue, dans laquelle la traverse avant pivote tandis que la traverse arrière est rigidement fixée au fuselage de l'hélicoptère, chacune des traverses est reliée au patin correspondant par l'intermédiaire d'un dispositif d'absorption d'énergie et/ou de limitation d'effort qui est un amortisseur hydraulique de conception classique, logé dans le patin correspondant. La liaison entre chaque traverse et le patin correspondant est assurée par l'intermédiaire d'un levier coudé, la traverse étant articulée à une extrémité du levier coudé qui est monté pivotant par son coude sur le patin, et dont l'autre extrémité est articulée sur l'extrémité de la tige de piston de l'amortisseur hydraulique, pivote par ailleurs dans le patin par l'extrémité de son cylindre.

En plus des inconvénients liés à la complexité de cette réalisation et à la difficulté d'accès à l'amortisseur hydraulique, qui nécessite une maintenance, l'inconvénient majeur de cette réalisation est que l'énergie d'impact est absorbée par les effets combinés de la déformation élastique puis, éventuellement, plastique des traverses, connue dans les trains à patins classiques, et de la déformation d'un amortisseur de choc et limiteur d'effort classique hydraulique, sans possibilité d'absorber de l'énergie de «crash» par déformation plastique contrôlée d'un dispositif mécanique spécialement aménagé à cet effet, au-delà d'un seuil prédéterminé, après la déformation élastique des traverses.

Le problème à la base de l'invention est de remédier à ces inconvénients et de proposer un train à patins, du type présenté ci-dessus, aménagé et équipé de façon simple et pratique d'un dispositif mécanique afin que ces trains à patins présentent une capacité «anti-crash».

A cet effet, le train d'atterrissage à patins selon l'invention, du type présenté ci-dessus, se caractérise en ce que l'autre traverse de chaque atterrisseur est également articulée sur la structure, autour d'un axe parallèle à l'axe d'articulation sur la structure de la première traverse de l'atterrisseur correspondant, le dispositif d'absorption d'énergie et/ou de limitation d'effort étant un dispositif mécanique à absorption d'énergie par déformation plastique qui est extérieur aux traverses et au patin de l'atterrisseur correspondant et qui est rattaché d'autre part soit au patin correspondant, soit à la structure de l'aérodyne.

De façon en soi connue, notamment par la demande précitée, le dispositif d'absorption d'énergie par déformation plastique et/ou de limitation d'effort comprend des éléments de roulement, tels que des billes, interposés avec serrage entre deux organes destinés à coulisser axialement l'un dans l'autre après rupture d'un élément frangible à charge de rupture prédéterminée, destiné à immobiliser les deux organes l'un par rapport à l'autre dans une position initiale, de sorte que les éléments de roulement provoquent une dissipation d'énergie par déformation plastique de l'un au moins des deux organes, lorsque l'effort axial supporté par le dispositif est supérieur à un seuil correspondant à la charge de rupture de l'élément frangible.

Selon une première forme de réalisation propre à l'invention, les deux traverses de chaque atterrisseur sont d'une part, rigidement fixées par l'une de leurs extrémités au patin correspondant et d'autre part, articulées sur la structure de l'aérodyne autour d'un axe charnière commun, disposé vers l'autre atterrisseur par rapport au patin correspondant, le composant muni d'un dispositif d'absorption d'énergie par déformation plastique et/ou de limitation d'effort étant articulé sur la structure de l'aérodyne par l'une de ses extrémités et sur l'une des traverses par son autre extrémité, et sollicité lorsque les atterrisseurs s'écartent l'un de l'autre par un pivotement d'ensemble de chacun d'eux autour de son axe charnière. Dans cette forme de réalisation, pour laquelle l'absorption d'énergie s'effectue par écartement des traverses des atterrisseurs, avant que celles-ci ne se déforment elles-mêmes plastiquement, ainsi éventuellement que les autres éléments des atterrisseurs, tels que les patins et les articulations, si l'énergie à l'impact est très supérieure à celle que peut absorber le dispositif, il est avantageux, lorsque le patin de chaque atterrisseur est monté latéralement sous la structure de l'aérodyne, comme cela semble être toujours le cas, que l'une des traverses de chaque atterrisseur, qui constitue une traverse avant, est articulée par son autre extrémité sur l'axe charnière, tandis que l'autre traverse, qui constitue une traverse arrière, est articulée d'une part par son autre extrémité sur l'extrémité correspondante du composant muni d'un dispositif d'absorption d'énergie par déformation plastique et/ou de limitation d'effort, et d'autre part, en un point situé entre ses deux extrémités, sur l'axe charnière, de sorte que ledit composant est sollicité en traction lorsque les atterrisseurs s'écartent latéralement l'un de l'autre.

En effet, dans ce cas, le composant muni du dispositif d'absorption d'énergie est sollicité dans de bonnes conditions, aussi bien lors d'un impact vertical, avec une vitesse verticale importante, que lors d'un impact combiné, avec à la fois une vitesse horizontale et une vitesse verticale importantes, puisqu'il absorbe environ les deux tiers de l'énergie d'impact reçue par l'atterrisseur correspondant.

Par ailleurs, comme ce composant travaille en traction, il n'est pas nécessaire de le dimensionner pour qu'il résiste au flambage, ce qui en limite le poids.

Si de plus, les traverses sont des éléments tubulaires cintrés dont la concavité est tournée vers le dessous de la structure de l'aérodyne et si les composants munis d'un dispositif d'absorption d'énergie sont articulés par leur extrémité inférieure sur l'extrémité correspondante des traverses arrière des atterrisseurs et par leur extrémité supérieure sur la structure de l'aérodyne, on obtient un train dont les composants munis d'un dispositif d'absorption d'énergie peuvent être logés dans le fuselage de l'aérodyne, de sorte que la traînée aérodynamique de ce dernier n'est pas augmentée, et que ces composants gardent pratiquement les mêmes positions, ce qui présente l'avantage que la direction des efforts qu'ils supportent reste sensiblement la même et que ces composants gardent leur efficacité tout au long de l'impact.

Selon une autre forme de réalisation, les deux traverses de chaque atterrisseur sont articulées sur le patin correspondant autour d'axes parallèles entre eux et aux axes d'articulation des traverses sur la structure de l'aérodyne, de manière a constituer avec le patin sensiblement un parallélogramme déformable, dont les efforts de contreventement sont repris par chaque composant muni d'un dispositif d'absorption d'énergie et qui est articulé lui-même autour d'axes parallèles aux axes d'articulation des traverses.

Dans ce cas, l'absorption d'énergie se produit à la fois par un écartement des traverses de l'un des atterrisseurs par rapport à celles de l'autre, et par une déformation des composants munis d'un dispositif d'absorption d'énergie, cette déformation étant liée à la rotation des traverses autour de leurs axes d'articulation sur la structure.

Selon une première variante de ce mode de réalisation, sur chaque atterrisseur, chaque composant muni d'un dispositif d'absorption d'énergie est articulé entre le patin correspondant et une traverse, ce qui a pour avantage que les efforts d'atterrissage restent internes au train d'atterrissage, et les seuls éléments du train à renforcer pour tenir les efforts à l'impact sont les articulations (axe de rotation et ferrures d'attache). Il est à noter également que cette réalisation est facilement adaptable sur un hélicoptère déjà équipé d'un train à patins.

En particulier, dans le cas d'un train dont le patin de chaque atterrisseur est monté latéralement sous la structure de l'aérodyne et relié à cette dernière par une traverse avant et une traverse arrière, le train comprend, pour chaque atterrisseur, un seul composant muni d'un dispositif d'absorption d'énergie, et qui est articulé par son extrémité inférieure sur le patin et par son extrémité supérieure sur la traverse arrière. L'augmentation de la masse d'un tel train et celle de la traînée aérodynamique dues à la présence du composant et à la position qu'il occupe sont faibles. Si l'unique composant de chaque atterrisseur est dans ce cas articulé sur le patin en un point situé entre les articulations des deux traverses correspondantes sur ce patin, lesquelles sont légèrement décalées vers l'arrière par rapport aux articulations des traverses sur la structure, on obtient, de plus que le composant est sollicité en compression. Ce composant doit être dimensionné afin qu'il résiste au flambage, mais ce désavantage est compensé par la plus faible longueur totale qu'il présente lorsqu'il est ainsi disposé par rapport à celle qu'il devrait présenter s'il était sollicité en traction en étant articulé sur le patin par exemple derrière l'articulation de la traverse arrière sur ce dernier.

Selon une seconde variante de ce mode de réalisation, sur chaque atterrisseur, chaque composant muni d'un dispositif d'absorption d'énergie est articulé entre une traverse et la structure de l'aérodyne, ce qui permet de faire reprendre par cette structure les efforts introduits par le composant, et si chaque composant est articulé sur un levier solidaire de la traverse correspondante, il devient de plus possible de loger les composants dans le fuselage de l'aérodyne, ce qui est avantageux sur le plan de la traînée aérodynamique.

Dans un exemple particulier de réalisation de train dont le patin de chaque atterrisseur est monté latéralement sous la structure de l'aérodyne et relié à cette dernière par une traverse avant et une traverse arrière, le train comprend, pour chaque atterrisseur, un seul composant muni d'un dispositif d'absorption d'énergie, qui est articulé sur le levier solidaire de la traverse arrière en un point situé du côté opposé à l'articulation de cette dernière sur le patin par rapport à son articulation sur la structure de l'aérodyne, ce qui offre l'avantage de permettre un positionnement du composant de sorte que ce dernier reste sensiblement dans la même position pendant toute la durée de l'impact, et sur toute l'amplitude du pivotement de la traverse arrière correspondante, et qu'il conserve en conséquence son efficacité.

Enfin, il est également possible de faire travailler ce composant en traction.

Dans les différentes variantes de cette forme de réalisation, il est avantageux que les axes d'articulation des traverses et du ou des composants munis d'un dispositif d'absorption d'énergie d'un atterrisseur soient parallèles et de préférence confondus avec les axes d'articulation correspondants de l'autre atterrisseur, ce qui permet un bon équilibrage dans la répartition des efforts, et le train selon l'invention présente une structure simple si chacune des traverses d'un atterrisseur est solidaire de la traverse correspondante de l'autre atterrisseur par un tronçon rectiligne, monté tourillonnant dans des ferrures de la structure de l'aérodyne.

En particulier, chacune des deux paires de traverses correspondantes des deux atterrisseurs peut avantageusement être constituée par un élément tubulaire allongé et cintré à ses deux extrémités, et qui présente une concavité tournée vers le dessous de la structure de l'aérodyne.

Par contre, pour équiper les trains dont les composants munis d'un dispositif d'absorption d'énergie sont articulés entre les traverses et la structure de l'aérodyne, on utilise avantageusement un composant tel qu'une contrefiche faisant l'objet de la demande précitée, avec les différences que le boulon à tige partiellement filetée qui immobilise l'élément télescopique dans l'élément tubulaire est vissé dans un taraudage radial traversant l'élément tubulaire non pas à son extrémité traversée par l'élément télescopique mais dans sa partie en regard de l'extrémité de l'élément télescopique à l'intérieur de l'élément tubulaire, que l'organe déformable plastiquement est constitué par l'élément tubulaire, et que, en position initiale, l'élément télescopique est rentré au maximum dans l'élément tubulaire, afin d'offrir une course maximale lorsque le composant ainsi réalisé est sollicité en traction.

La présente invention sera mieux comprise à l'aide des exemples particuliers de réalisation qui sont décrits ci-après, à titre non limitatif, en référence aux figures annexées dans lesquelles:

– la figure 1 est une vue schématique d'un vérin muni d'un dispositif d'absorption d'énergie par déformation plastique et/ou de limitation d'effort destiné à être sollicité en traction,

– les figures 2 et 3 sont des vues en coupe partielle d'une extrémité du vérin selon la figure 1, respectivement avant et après rupture de l'élément frangible,

– la figure 4 est une vue analogue à la figure 1 pour un vérin dont le dispositif d'absorption d'énergie par déformation plastique et/ou de limitation d'effort est destiné à être sollicité en compression,

– les figures 5 et 6 sont des vues analogues aux figures 2 et 3 pour le vérin selon la figure 4,

– la figure 7 est une vue en coupe partielle d'une contre-fiche munie d'un dispositif d'absorption d'énergie par déformation plastique et/ou de limitation d'effort,

– la figure 8 est une vue schématique longitudinale d'un premier exemple de train à patins,

– la figure 9 est une vue en perspective de l'atterrisseur gauche du train selon la figure 8 (l'atterrisseur droit étant symétrique) dans la position qu'il occupe sur un hélicoptère dont, par souci de clarté, on n'a représenté que les ferrures d'attache de l'atterrisseur gauche,

– la figure 10 est une vue en coupe du composant muni d'un dispositif d'absorption d'énergie équipant l'atterrisseur de la figure 9,

– les figures 11 et 12 sont des vues de côté de l'atterrisseur de la figure 9 respectivement avant déclenchement du dispositif d'absorption d'énergie et après,

– les figures 13 à 17 sont des vues respectivement analogues aux figures 8 à 12 pour un second exemple de train à patins,

– la figure 18 est une vue schématique en coupe transversale d'un troisième exemple de train à patins monté sur un hélicoptère, et

– les figures 19 à 22 sont des vues respectivement analogues aux figures 9 à 12 pour ce troisième exemple de train à patins.

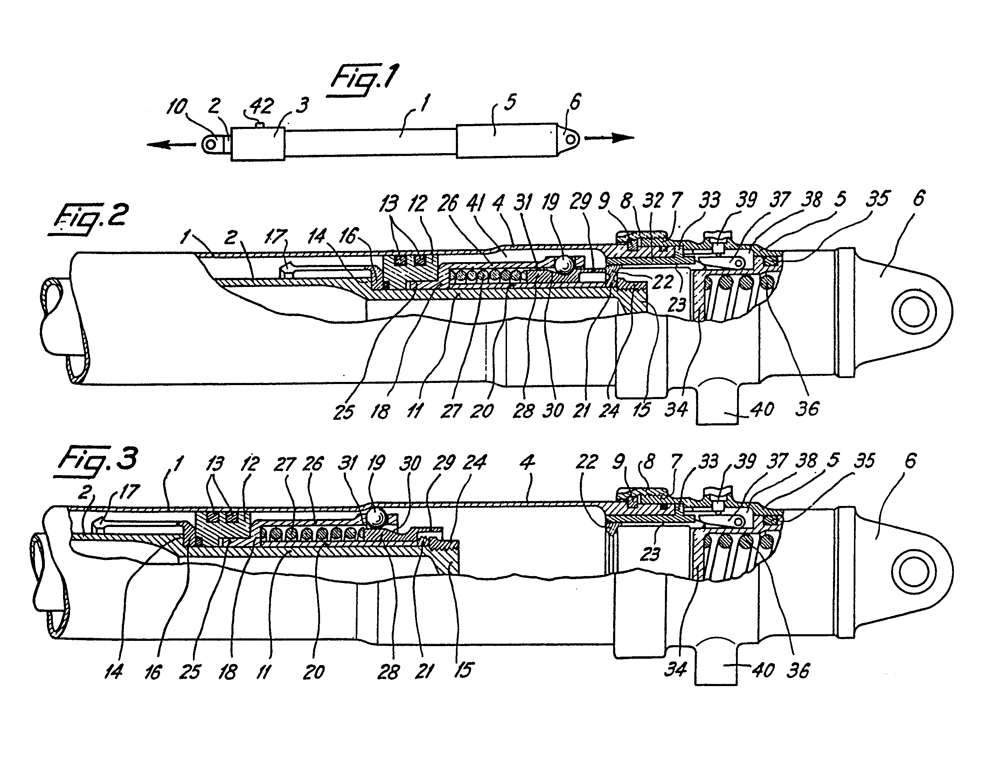

En référence aux figures 1 à 3, le vérin est constitué d'un cylindre 1, dans lequel est montée coulissante avec étanchéité une tige 2, guidée à l'extrémité 3 du cylindre 1 traversée par la tige 2 par une bague et au moins un joint d'étanchéité dynamique (non représentés). L'autre extrémité du cylindre 1, présentant une portion cylindrique de plus grand diamètre interne 4, est fermée par un embout creux 5. Cet embout 5 porte, à une extrémité, une attache 6, et présente à son autre extrémité un filetage externe sur une partie cylindrique 7 par laquelle l'embout 5 est monté autour de l'extrémité de la portion 4 du cylindre 1, et se trouve retenu sur cette dernière grâce à une bague 8 taraudée, retenue sur le cylindre 1 par une butée axiale 9 disposée dans une gorge sur la face extérieure du cylindre 1, un joint d'étanchéité étant interposé entre la partie 7 de l'embout 5 et la portion 4 du cylindre 1. La tige 2 est munie, à son extrémité externe au cylindre 1, d'une attache 10, et à son extrémité interne au cylindre 1, présentant une portion de plus petit diamètre externe 11, d'un piston 12, équipé de joints d'étanchéité dynamique 13, coulissant sur la paroi interne du cylindre 1 et guidant la tige 2 dans ses déplacements vis-à-vis de ce dernier. Sur la portion de plus petit diamètre externe 11 de la tige 2, sont successivement disposés, de l'épaulement radial 14 vers l'extrémité obturée et extérieurement filetée 15 délimitant la portion 11 de la tige 2, le talon radial interne 16 du pied d'un ensemble de griffes élastiques 17, destinées à s'encliqueter élastiquement derrière un redan prévu dans l'extrémité 3 du cylindre 1, pour assurer le verrouillage du vérin hydraulique en position «tige sortie» (de façon analogue à ce qui est décrit ci-après pour le verrouillage en position «tige rentrée», comme représenté sur la figure 2), puis le piston 12, une cage 18 pour des billes 19, une entretoise 20, la couronne intérieure 21 du talon radial interne du pied d'un ensemble de griffes élastiques 23, et enfin un écrou de retenue 24 vissé sur le filetage de l'extrémité obturée 15. La couronne intérieure 21 est séparée par une section à charge de rupture par cisaillement prédéterminée de la couronne extérieure 22 du talon radial interne, qui constitue ainsi un élément frangible, désigné ci-après par le terme de fusible mécanique. La cage 18 présente une partie cylindrique de plus petit diamètre interne 25, radialement disposée entre le piston 12 et la portion 11 de la tige 2, ainsi qu'une partie cylindrique de plus grand diamètre interne 26, présentant des perçages radiaux centrés dans un plan diamétral et dans chacun desquels est reçue une bille 19, et entourant un ressort 27 disposé lui-même autour de l'entretoise 20. Le ressort 27 prend appui par l'une des ses extrémités contre la partie radiale de la cage 18 séparant les deux parties cylindriques 25 et 26 de cette dernière et, par son autre extrémité, contre un anneau 28. L'anneau 28, de forme extérieure cylindrique, monté coulissant autour de l'entretoise 20, se trouve muni d'une queue 29 d'appui contre la couronne extérieure 22 du fusible mécanique, et présente sur sa face externe une gorge 30, de section en partie circulaire raccordée par une surface conique à une surface externe cylindrique 31 de l'anneau 28, dirigée vers la face de ce dernier contre laquelle prend appui le ressort 27.

Le blocage de la tige 2 en position rentrée dans le cylindre 1 est assuré par l'encliquetage élastique des têtes des griffes 23 derrière un redan, constitué par l'extrémité d'un manchon 32, s'étendant dans le cylindre 1, radialement disposé entre une partie d'extrémité de la portion 4 de ce dernier et l'ensemble des griffes 23, et maintenu en position par son épaulement radial externe 33 serré entre un épaulement radial de l'embout 5 et l'extrémité de la portion 4 du cylindre 1. Le verrouillage des griffes 23 dans cette position tige rentrée est assuré par un dispositif d'arrêt, comprenant un piston de verrouillage 34, monté coulissant avec étanchéité dans un alésage de l'embout 5, grâce au joint d'étanchéité 35, et poussé par un ressort 36 prenant appui contre le fond fermé de l'embout 5, vers l'intérieur du cylindre 1, jusqu'à venir se loger à l'intérieur des têtes des griffes 23, pour empêcher ces dernières de se dégager de l'extrémité du manchon 32. Le dispositif d'arrêt est associé à un dispositif de contrôle de verrouillage comportant un taquet 37, monté pivotant par une extrémité dans une chambre médiane 38 de l'embout 5, et dont l'autre extrémité est appliquée contre la tête d'une des griffes 23.

Celles-ci, lors du verrouillage, déplacent le taquet 37 lequel actionne un contacteur 39. Un voyant placé au poste de pilotage permet à l'équipage de contrôler le verrouillage tige rentrée.

La mise sous pression de la chambre 38 de l'embout 5 au travers du raccord 40 d'alimentation en huile hydraulique repousse le piston 34 vers le fond dudit embout, contre le ressort 36 et assure successivement le déverrouillage des griffes 23, un déplacement initial de la tige 2 avec les griffes 23 libérées dans le cylindre 1, vers la position tige sortie, et l'alimentation en huile sous pression de la chambre définie par le cylindre 1, la tige 2 et le piston 12, ce qui provoque la sortie de la tige, qui est verrouillée en fin de course, en position tige sortie, par coopération des griffes 17 avec un dispositif d'arrêt analogue à celui venant d'être décrit, mais disposé dans l'extrémité 3 du cylindre 1, traversée par la tige 2, et donc dans lequel le piston de verrouillage est un piston annulaire.

Le vérin hydraulique qui vient d'être décrit, à verrouillage mécanique et à déverrouillage hydraulique dans les deux positions en fin de course, est destiné à être solidarisé par l'attache 6 de son cylindre 1 et l'attache 10 de sa tige 2 à deux éléments, que le vérin doit en certaines circonstances déplacer l'un par rapport à l'autre et, en d'autres circonstances maintenir rigidement positionnés l'un par rapport à l'autre, lorsqu'il est en configuration tige rentrée, à l'encontre d'une charge sollicitant l'un des deux éléments. Lorsque cette dernière est une charge provoquant la sollicitation en traction du vérin, avec une valeur supérieure à un effort maximum admissible, pouvant être transmis par le vérin de l'un à l'autre des éléments, sans risque d'endommager l'un de ces derniers, il est clair que le vérin doit permettre de limiter l'effort transmis à une valeur acceptable prédéterminée, et donc d'absorber et de dissiper une certaine quantité d'énergie en excès. Ceci est obtenu en calibrant la section de rupture à charge de cisaillement prédéterminée, qui sépare les deux couronnes intérieure 21 et extérieure 22 de l'élément frangible, à la valeur de l'effort maximum de traction pouvant être transmis, constituant la valeur de déclenchement du fonctionnement du dispositif d'absorption d'énergie par déformation plastique, dont est équipé le vérin.

Dans le cas où l'effort de traction sur le vérin atteint la valeur de déclenchement prédéterminée, la section de rupture se rompt et la couronne intérieure 21 se sépare de la couronne extérieure 22 du talon des griffes 23, maintenues en place par le dispositif d'arrêt. La tige 2 commence un déplacement de sortie du cylindre 1, tandis que le ressort 27 se détend en maintenant l'anneau 28 en butée par sa queue 29 contre la couronne extérieure 22. Cependant, comme la cage 18 est entraînée avec la tige 2 par l'intermédiaire de l'entretoise 20, de la couronne intérieure 21 et de l'écrou 24, la partie 26 de la cage 18 est donc déplacée axialement par rapport à l'anneau 28, et provoque la sortie des billes 19 hors de la rainure 30, grâce à la surface conique qui la raccorde à la surface externe cylindrique 31 de l'anneau 28, sur laquelle les billes 19 viennent reposer. Le dispositif d'éjection des billes 19 ainsi réalisé permet de faire saillir ces dernières dans le chambrage 41 délimité par la portion d'extrémité 4 de plus grand diamètre interne du cylindre 1, après la rupture de l'élément frangible. Sous l'effet de la traction, la tige 2 se déplace ensuite dans le cylindre 1, en entraînant les billes 19, positionnées par la cage 18 de façon à prendre appui radialement vers l'intérieur sur la partie cylindrique 31 de l'anneau 28. Comme les billes 19 ont un diamètre supérieur, d'une valeur déterminée, à la différence entre le rayon interne du cylindre 1, dans sa partie médiane de plus petit diamètre interne, et le rayon de la surface cylindrique 31 de l'anneau 28, lorsqu'elles arrivent à la fin du chambrage 41, elles déforment plastiquement le cylindre 1 du vérin, sur le restant de la course de la tige 2 dans le cylindre 1, comme cela est représenté sur la figure 3, ce qui provoque une absorption et une dissipation d'énergie permettant de limiter à une valeur acceptable l'effort transmis par le vérin, tout au moins tant que dure la déformation.

La quantité d'énergie absorbée est déterminée notamment par l'importance de l'empreinte des billes 19, par leur nombre et par l'épaisseur du cylindre 1, ainsi que par les duretés relatives des matériaux choisis pour réaliser ces éléments. Si l'absorption d'énergie doit être constante, la déformation sera constante tout le long de la course des billets 19, en utilisant un cylindre de section et d'épaisseur constantes, mais si l'on désire une absorption variable le long de la course des billes 19, le cylindre peut être d'épaisseur variable adapté au profil désiré.

Si les effets désirés conduisent à une définition du cylindre 1 incompatible avec l'exercice de sa fonction normale de cylindre d'un vérin hydraulique d'une cylindrée adaptée, compte tenu de la pression hydraulique régnant dans le circuit hydraulique d'alimentation, aux efforts à développer pour manœuvrer sur une course voulue et bloquer en position les deux éléments auxquels le vérin est relié, le cylindre 1 peut être doublé par un fourreau interne, déformable plastiquement dans les memes conditions, et moulé avec un jeu radial suffisant pour admettre la déformation plastique provoquée par les billes 19.

Le vérin venant d'etre décrit a pour avantage que la course des billes 19 est pratiquement la même que celle de la tige 2 dans le cylindre 1, tout en présentant les avantages d'un montage en série d'un dispositif combiné remplissant les fonctions de vérin et d'absorption d'énergie et/ou de limitation d'effort. La longueur du vérin n'est donc pas modifiée par l'adjunction d'une fonction supplémentaire d'absorption d'énergie et/ou de limitation d'effort à sa fonction principale.

Par ailleurs, il faut noter qu'une membrane tarée ou un clapet de surpression 42 est disposé dans l'extrémité 3 du cylindre 1, traversée par la tige 2, de façon à autoriser la purge vers l'extérieur du vérin de la chambre annulaire définie entre le cylindre 1 et la tige 2, par le piston 12 et l'extrémité 3 du cylindre 1, de sorte que l'huile remplissant cette chambre ne s'oppose pas au déplacement du piston 12 avec la tige 2 dans le cylindre 1, après rupture de l'élément frangible et lors du déplacement des billes 19 déformant plastiquement le cylindre 1.

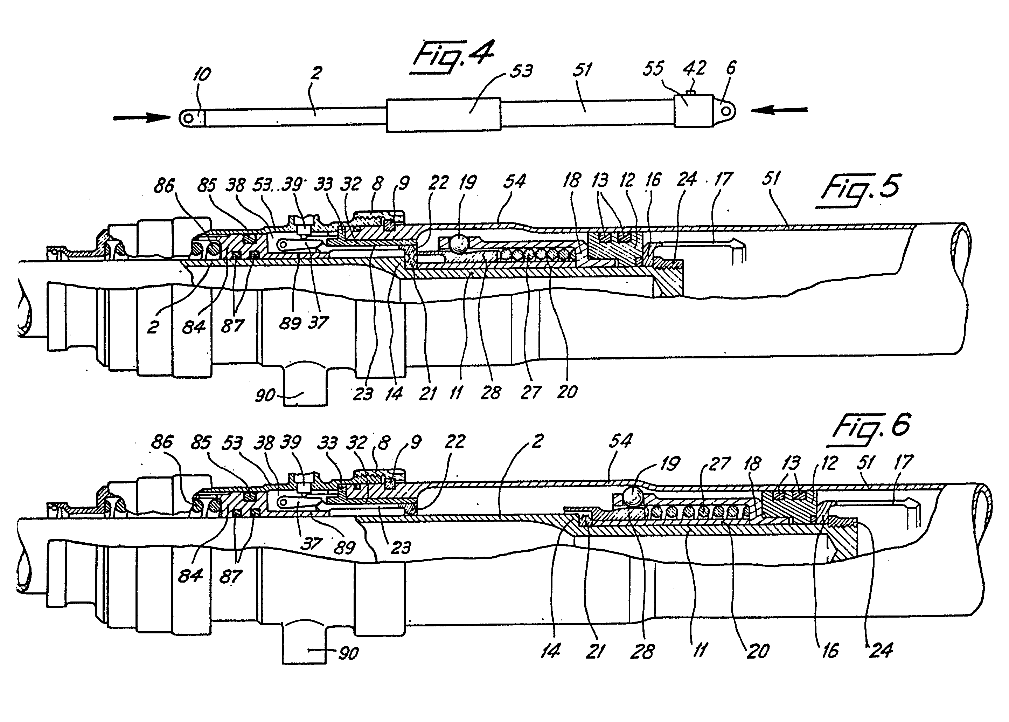

Sur les figures 4 à 6, on a représenté un vérin muni d'un dispositif d'absorption d'énergie et/ou de limitation d'effort destinés à être sollicité en compression, à partir de la position tige sortie, par un effort supérieur à une valeur maximale admissible.

Les éléments de ce vérin identiques à ceux du vérin décrit en référence aux figures 1 à 3 sont répérés par les mêmes références.

Il faut noter, en particulier, que la tige 2 est identique, mais que l'ensemble des pièces qu'elle porte sur sa partie d'extrémité 11, de plus petit diamètre externe, est disposé en sens opposé, de sorte que les griffes 23, munies à leur pied d'un talon radial constituant l'élément frangible par ses couronnes intérieure 21 et extérieure 22, puissent être verrouillées par un dispositif d'arrêt reçu dans l'embout 53 de l'extrémité du cylindre 51 traversée par la tige 2. C'est donc la couronne intérieure 21 qui est serrée entre l'épaulement 14 de la tige 2 et l'entretoise 20, tandis que le talon radial interne 16 des griffes 17 est serré entre le piston 12 et l'écrou 24, la cage 18, les billes 19, l'anneau 28 et le ressort 27 occupant vis-à-vis du piston 12 et de la couronne intérieure 21 les mêmes positions relatives que précédemment, et l'ensemble constituant un système d'éjection des billes 19 en saillie dans le chambrage délimité par la portion de plus grand diamètre interne 54 du cylindre 51, après rupture de l'élément frangible.

Le dispositif d'arrêt, reçu dans l'embout 53, comprend un piston de verrouillage 84 annulaire, monté coulissant avec étanchéité à l'intérieur d'un alésage de l'embout 53 grâce au joint 85 et autour de la tige 2 grâce aux joints 87, et sollicité par un ressort 86 de sorte que le prolongement axial 89 du piston 84 vienne bloquer les griffes 23 derrière le redan du manchon 32, dont le talon radial 33 est serré contre l'extrémité de la portion 54 du cylindre 51 par l'embout 53. Ce dernier présente une chambre médiane 38, dans laquelle est monté pivotant le taquet 37, sollicitant le contacteur 39 lors du verrouillage des griffes 23, ainsi qu'un raccord d'alimentation 90 en huile hydraulique pour commander le déverrouillage hydraulique et la manœuvre du vérin.

Le fonctionnement de ce vérin est en tout point analogue à cleui du vérin décrit en référence aux figures 1 à 3, mis à part que le dispositif d'absorption d'énergie et/ou de limitation d'effort est déclenché par un effort de compression supérieur à la charge de rupture en cisaillement prédéterminée de la section séparant les couronnes extérieure 22 et intérieure 21 de l'élément frangible, et s'exerçant sur le vérin verrouillé en configuration tige sortie. En conséquence, la membrane tarée ou le clapet de surpression symbolisé en 42 est prévu sur l'embout 55 de l'extrémité du cylindre 51 non traversée par la tige 2, pour autoriser la vidange du cylindre 51 lors de la rentrée de la tige 2 après rupture de l'élément frangible.

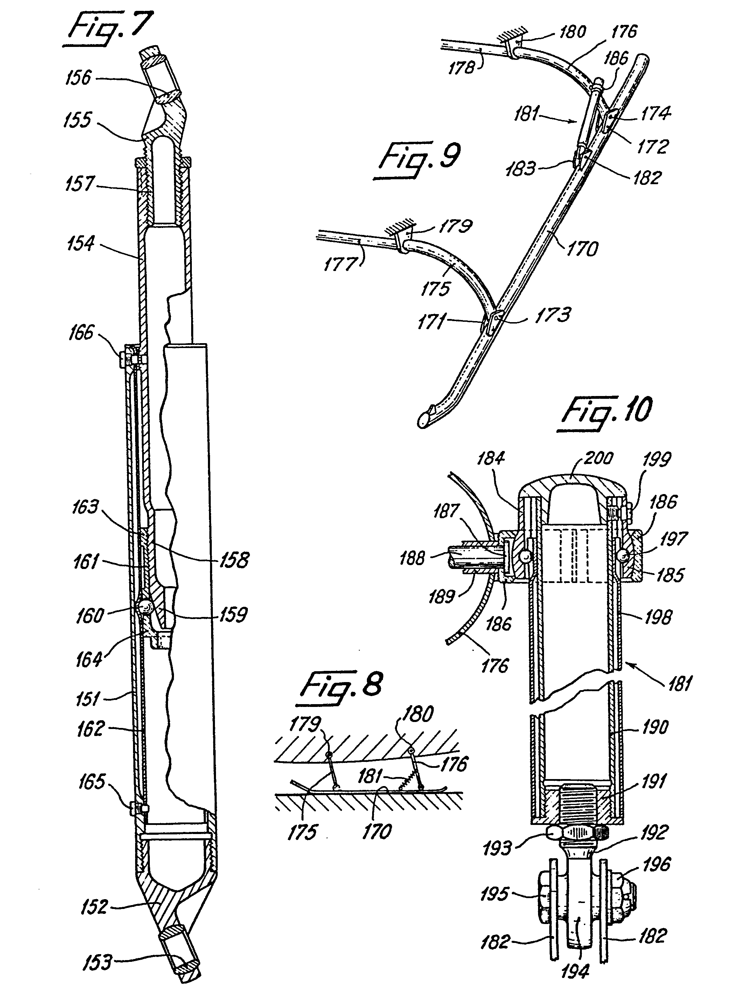

La contre-fiche représentée sur la figure 7 est constituée d'un corps 151, de forme cyllindrique, dont une extrémité est fermée par un embout 152, vissé dans le corps 151, et muni d'un dispositif de liaison mécanique tel qu'une rotule 153, et dont l'autre extrémité est traversée par une tige 154. Cette tige 154, dont l'extrémité externe au cylindre 151 porte également un embout 155, muni d'une rotule 156, et vissé dans la tige 154 de manière réglable pour ajuster la longueur de la contre-fiche à une dimension voulue, grâce à sa partie filetée 157, présente à l'intérieur du cylindre 151, une portion cylindrique de plus petit diamètre interne 158, extérieurement filetée, se prolongeant par une portion d'extrémité conique 159. Sur cette dernière prennent appui des billes 160, retenues dans une cage tubulaire 161, vissée sur le filetage de la portion cylindrique 158 de la tige 154, et coulissant à l'intérieur d'un fourreau déformable plastiquement 162, serti sensiblement en son milieu autour de la partie des billes 160 qui dépasse de la cage 161, et doublant le corps 151 à l'intérieur de ce dernier avec un jeu radial suffisant pour permettre sa déformation plastique, avec absorption et dissipation d'énergie, lorsque les billes 160 sont déplacées avec la tige 154 par l'intermédiaire de la cage 161, dans l'une ou l'autre direction dans le corps 151. Pour favoriser le guidage lors d'un déplacement en direction tige sortie ou en direction tige rentrée, la cage 161 présente respectivement une partie cylindrique d'extrémité 163 ou 164, coulissant à l'intérieur du fourreau 162 avant sa déformation. Le fourreau 162 est maintenu en position axiale dans le cylindre 151 par des boulons 165, à tige partiellement filetée, vissée dans un alésage radial du cylindre 151 à son extrémité voisine de l'embout 152, et par des boulons 166, à tige partiellement filetée vissée dans un alésage radial du cylindre 151 à son extrémité traversée par la tige 154, les parties non filetées des tiges des boulons 165 et 166 traversant des perçages ménagés dans les extrémités en regard du fourreau 162. La partie nonfiletée de la tige des boulons 166 présente de plus une section frangible, à charge de rupture en cisaillement prédéterminée de la tige des boulons 166 présente de plus une section frangible, à charge de rupture en cisaillement prédéterminée, de sorte qu'elle constitue un fusible mécanique. L'extrémité des ces tiges pénètre dans un perçage radial de la tige 154, de sorte que les boulons 166 assurent le blocage axial en position initiale de la tige 154 dans le cylindre 151.

La contre-fiche est donc constituée d'une tige 154 bloquée en position demi-sortie dans le cylindre 151 par des fusibles mécaniques, dont la rupture s'effectue à une valeur prédéterminée de la sollicitation en compression ou en traction s'exerçant sur la contre-fiche, et correspondant à la valeur de déclenchement du dispositif d'absorption d'énergie et/ou de limitation d'effort par déformation plastique du fourreau 162 par les billes 160.

Il est clair que dans cette configuration, la course du dispositif d'absorption d'énergie est limitée sensiblement à la moitié de la longueur du corps 151.

Mais si le dispositif d'absorption d'énergie de la contre-fiche est destiné à n'être sollicité respectivement qu'en compression ou qu'en traction, la tige 154 peut être bloquée en position initiale respectivement tige sortie ou tige rentrée par les boulons 166, de sorte que pratiquement toute la longueur du cylindre 151 puisse être utilisée comme course du dispositif d'absorption d'énergie. Bien entendu, le fourreau 162 est alors serti sur les billes 160 par son extrémité correspondante.

Si on le désire, il est également possible de supprimer le fourreau 162, qui présente l'avantage de pouvoir être remplacé après déformation, et de réaliser la contrefiche de sorte que les billes 160 déforment plastiquement le cylindre 151.

Le vérin et la contre-fiche qui viennent d'être décrits en référence aux figures 1 à 7 sont bien adaptés à l'équipement des trains d'atterrissage des aérodynes, et en particulier des hélicoptères, auxquels ces composants permettent de donner une aptitude «anti-crash».

L'atterrisseur gauche d'un train d'atterrissage à patins pour hélicoptères, représenté sur les figures 8 et 9, comprend un patin 170 constitué par un élément tubulaire dont les extrémités sont relevées (l'extrémité avant dans une plus large mesure que l'extrémité arrière) et sur lequel sont soudées ou boulonnées une paire de pattes d'attache avant 171 et une paire de pattes d'attache arrière 172, qui épousent à leur partie inférieure la forme de l'élément tubulaire 170 et dont les parties supérieures sont verticales et parallèles pour chaque paire, de manière à former deux chapes dans lesquelles sont montées pivotantes autour d'axes transversaux 173 et 174, perpendiculaires au plan longitudinal de symétrie de l'hélicoptère, les extrémités inférieures d'une traverse avant 175 et d'une traverse arrière 176. Chacune des traverses 175 et 176 est réalisée d'une seule pièce avec respectivement la traverse avant et la traverse arrière de l'atterrisseur droit, et chaque paire de traverses ainsi obtenue est constituée par un élément tubulaire dont les extrémités ont été cintrées dans le même sens et de manière identique de sorte qu'il présente un tronçon central rectiligne 177 ou 178 de part et d'autre duquel sont formées les deux traverses correspondantes.

Chaque paire de traverses avant telles que 175 et de traverses arrière telles que 176 est montée pivotante sur la structure de l'hélicoptère autour d'un axe transversal perpendiculaire au plan longitudinal de symétrie par le tronçon central rectiligne correspondant 177 ou 178, qui est monté tourillonnant dans des ferrures 179 et 180 qui constituent simultanément des paliers de rotation des éléments 177 et 178 et des attaches structurales de liaison des atterrisseurs à la structure de l'hélicoptère.

Les traverses 175 et 176 sont donc articulées d'une part sur le patin 170 et d'autre part sur la structure de l'hélicoptère à la manière d'un parallélogramme déformable dans une direction longitudinale, car le patin 170 s'étend dans cette direction, latéralement et au-dessous de la cabine d'hélicoptère. L'atterrisseur est bloqué dans une position initiale de service par un composant à fonction principale mécanique 181, qui assure le contreventement de l'atterrisseur et se trouve monté pivotant au voisinage de son extrémité supérieure sur la traverse arrière 176 autour d'un axe transversal, c'est-à-dire parallèle aux axes 173 et 174, et par son extrémité inférieure autour d'un axe 182 également parallèle aux axes 173, 174 dans une chape constituée par deux pattes d'attache 183 analogues aux pattes avant 171 et arrière 172 et soudées ou boulonnées sur le patin tubulaire 170 comme ces dernières et entre ces dernières.

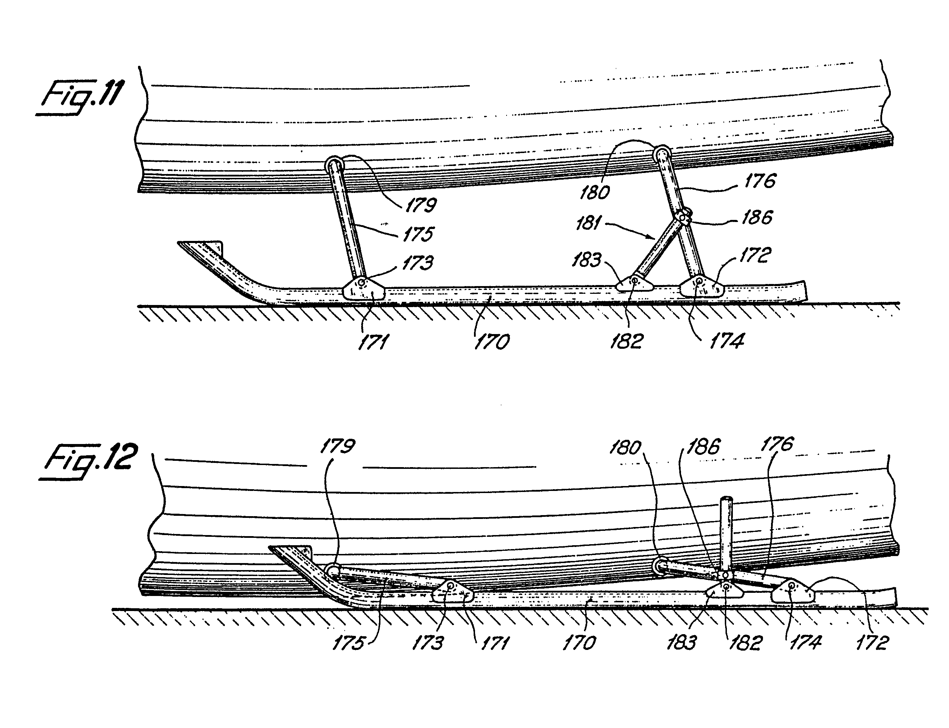

La longueur du composant 181 et la position de ses points d'articulation sur le patin 170 et sur la traverse arrière 176 sont choisies en tenant compte de la nature de ce composant pour qu'en position initiale de service les traverses avant et arrière 175 et 176 soient légèrement inclinées de haut en bas et de l'avant vers l'arrière, comme cela est représenté sur les figures 8 et 11, c'est-à-dire que les axes 173 et 174 d'articulation sur le patin 170 sont légèrement en arrière par rapport aux ferrures 179 et 180 d'articulation sur la structure.

Le composant 181 est un composant qui reprend les efforts de contreventement du parallélogramme, et qui est muni d'un dispositif d'absorption d'énergie par déformation plastique et/ou de limitation d'effort, du type décrit cidessus, qui fonctionne par déformation d'un tube par des billes. Ce composant est rigide pour des impacts qui s'effectuent avec une vitesse de chute inférieure à un seuil donné, qui correspond au seuil de déclenchement du dispositif d'absorption d'énergie, c'est-à-dire à la charge de rupture de son élément frangible, et pour des vitesses supérieures au seuil, ce composant limite les accélérations subies par la structure de l'hélicoptère en ne lui transmettant qu'un effort limité.

Ce composant 181 fonctionne alors comme un dispositif à haute absorption d'énergie, indépendamment de la vitesse d'impact lorsque cette dernière est supérieure au seuil.

Pour un atterrissage normal, c'est-à-dire avec une vitesse d'impact inférieure au seuil de déclenchement du dispositif d'absorption d'énergie, par exemple 2 m/s, l'énergie totale est essentiellement absorbée par la déformation élastique des traverses avant 175 et arrière 176, de sorte que les deux atterrisseurs s'écartent latéralement l'un de l'autre puis reprennent élastiquement leur position. Cette déformation élastique est favorisée par la forme des traverses cintrées dont la concavité est tournée vers le dessous de la cabine de l'hélicoptère. Par contre, pour un atterrissage avec une vitesse d'impact trop importante, qui déclenche le fonctionnement du dispositif d'absorption d'énergie, en sollicitant le composant 181 en compression, l'absorption d'énergie s'effectue d'une part par un écartement latéral des atterrisseurs et d'autre part par la déformation plastique de l'organe prévu à cet effet dans le composant 181, en raison de la rotation des traverses 175 et 176 vers l'arrière autour des ferrures d'articulation 179 et 180 sur la structure, et de la déformation correspondante du parallélogramme.

Le composant 181 est par exemple une contrefiche telle que celle représentée sur la figure 7, dont la position initiale correspond à une position de la tige sortie au maximum du corps, afin d'offrir une course maximum d'absorption d'énergie par déformation plastique sous une sollicitation en compression supérieure au seuil de déclenchement.

Mais le composant 181 peut également être un vérin de contreventement, voire même de manœuvre, si l'on souhaite pouvoir relever en vol les atterrisseurs par rapport à la cabine de l'hélicoptère, afin de diminuer la trainée, et ce vérin peut être tel que celui représenté sur les figures 4 à 6, dont le dispositif d'absorption d'énergie fonctionne en compression.

Le composant peut enfin être un amortisseur ou un amortisseur vérin équipé d'un dispositif d'absorption d'énergie, mais de telles solutions sont coûteuses et pénalisantes sur le plan du poids.

Pour ces raisons, on utilise de préférence le composant 181 représenté en coupe sur la figure 10, et qui est une contre-fiche dont l'élément tubulaire ou corps 184 est monté rotulé par sa partie inférieure en tronc sphérique 185 dans un berceau sphérique 186 monté pivotant autour de la tête 187 d'une broche 188 montée elle-même pivotante autour d'un axe transversal dans une douille 189 qui traverse la traverse arrière 176. L'élément tubulaire ou tige 190 de la contre-fiche est taraudé à son extrémité inférieure de façon à être vissé sur un fond 191 lui-même percé d'un alésage central taraudé dans lequel se visse la tige filetée d'un embout réglable 192, immobilisé en position axiale désirée sur le fond 191 par un contre-écrou 193, et qui porte une attache tubulaire 194 articulée sur les pattes d'attache 182 du patin 170 par une rotule traversée par un boulon 195 dont la partie lisse de la tige traverse l'attache tubulaire 194, et dont l'extrémité filetée de la tige est vissée dans un écrou 196 retenu par une goupille.

Le dispositif d'absorption d'énergie par déformation plastique et de limitation d'effort comprend un organe externe nondéformable plastiquement, qui est constitué par le corps 184 de la contre-fiche, dont la partie en tronc sphérique 185 présente des évidements en calotte sphérique régulièrement répartis sur la périphérie de son alésage cylindrique central, de manière à constituer une cage pour des billes 197, et l'organe interne déformable plastiquement est constitué par un fourreau tubulaire 198, qui double extérieurement la tige 190 de la contre-fiche avec un jeu radial suffisant pour admetre la déformation plastique. L'extrémité inférieure du fourreau 198 est appuyée contre un épaulement radial externe du fond 191 alors que son extrémité supérieure est radialement rétrécie afin de se loger entre la tige 190 et les billes 197 dans une position initiale dans laquelle la tige 190 et le corps 184 sont solidarisés l'un à l'autre par l'élément frangible à charge de rupture prédéterminée, à savoir un boulon 199 dont l'extrémité filetée de la tige est vissée dans un perçage radial de la tige 190 et est séparée de la partie lisse de la tige adjacente à la tête du boulon par une partie de section diminuée constituant la partie qui est cisaillée lorsque la charge axiale en compression dépasse un seuil prédéterminé. L'extrémité supérieure de la contre-fiche est fermée par un bouchon 200 qui est emboîté dans la tige 190.

Sur les figures 11 et 12 sont représentées les positions des différents éléments de l'atterrisseur respectivement lors d'un atterrissage normal ou avant le déclenchement du dispositif d'absorption d'énergie (figure 11), et après le déclenchement du dispositif, la tige 190 et le fourreau déformable 198 ayant traversé sur pratiquement toute leur longueur le corps 184 de la contre-fiche, et les billes 197 ayant déformé le fourreau 198 sur pratiquement toute sa longueur (figure 12).

Si les efforts de contreventement conduisent à des dimensions exagérées ou à l'utilisation de matériaux incompatibles avec un fonctionnement correct, c'est la tige 190 qui peut être déformée par les billes; le fourreau 198 est alors supprimé, ce qui procure un allègement toujours utile.

Le deuxième exemple de train à patins, représenté sur les figures 13 et 14, est analogue au premier exemple dans la mesure où il s'agit également d'un train dont les atterrisseurs sont montés en parallèlogramme déformable latéralement sous la cabine de l'hélicoptère. Les nombreux éléments de ce second exemple qui sont identiques à ceux du premier exemple sont repérés par les mêmes références. La différence essentielle réside dans le fait que le contreventement est, dans ce cas, assuré par un composant 201 qui est monté pivotant par son extrémité supérieure sur une ferrure structurale 202 autour d'un axe transversal, et par son extrémité inférieure, autour d'un axe transversal 203, sur l'extrémité supérieure d'un levier 204 solidaire par son extrémité inférieure du tronçon 178 de la traverse arrière 176. Le composant 201, à fonction essentiellement mécanqiue, afin de reprendre les efforts de contreventement, peut ainsi être logé dans la structure même de l'hélicoptère. Ce composant 201 est muni d'un dispositif d'absorption d'énergie par déformation plastique et/ou de limitation d'effort, qui est sollicité en traction dans cet exemple, de sorte qu'il est inutile de le dimensionner afin qu'il résiste au flambage, ce qui permet de ne pas l'alourdir. L'absorption d'énergie s'effectue dans ce cas dans les mêmes conditions que pour le premier exemple, c'est-à-dire, lors d'un atterrissage normal, par un écartement latéral des atterrisseurs l'un par rapport à l'autre suivi d'un retour en position initiale, grâce à la déformation élastique des traverses 175 et 176, et lors d'un atterrissage anormal, par l'écartement des atterrisseurs et la rotation simultanée des traverses 175 et 176 vers l'arrière, à la suite du déclenchement du dispositif d'absorption d'énergie par déformation plastique du composant 201. Ce dernier est par exemple une contre-fiche du type de celle représentée sur la figure 7, mais avec la tige rentrée au maximum en position initiale dans le corps, afin d'offrir une course maximum en traction, ou un vérin de contreventement et éventuellement de manœuvre, tel que celui représenté sur les figures 1 à 3, dont le dispositif d'absorption d'énergie fonctionne en traction, ou encore un amortisseur ou un amortisseur-vérin.

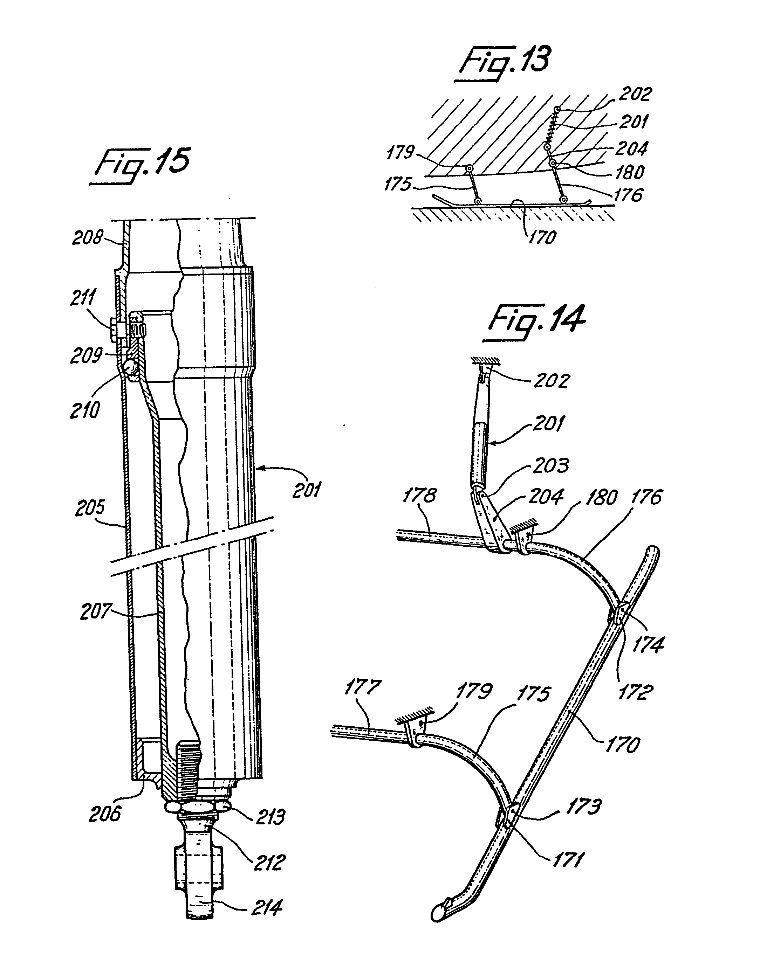

Mais, pour des raisons de coût, de poids et de simplicité, on utilise de préférence comme composant 201 la contre-fiche représentée en coupe sur la figure 15. Son corps est constitué par un tube déformable plastiquement 205 fixé à son extrémité inférieure sur un fond 206 percé d'un alésage central de guidage de la tige 207, et à son extrémité supérieure, radialement élargie, sur un embout rigide 208, à l'aide d'un boulon 211 dont la partie lisse de la tige traverse deux perçages radiaux alignés du tube 205 et de l'embout 208 et est séparée de l'extrémité filetée vissée dans une cage 209 retenant les billes 210 et dans l'extrémité supérieure de tige 207 par une section rétrécie à charge de rupture par cisaillement prédéterminée. L'embout 208 est muni d'une attache tubulaire (non représentée) de liaison à la ferrure structurale 202 par un axe transversal à rotule. Dans l'extrémité inférieure de la tige 207 est vissée la tige filetée d'un embout 212 bloqué en position axiale désirée par le serrage d'un contreécrou 213, et qui présente une attache tubulaire 214 par laquelle la tige 207 est montée pivotante autour de l'axe à rotule 203 sur l'extrémité supérieure en forme de chape du levier 204.

Dans cet exemple, l'organe plastiquement déformable est donc le corps 205 de la contre-fiche, et la tige 207 de celle-ci porte la cage 209 et entraîne les billes 210 qui déforment plastiquement le tube 205 lorsque l'effort de traction dépasse le seuil de déclenchement fixé par la charge prédéterminée de cisaillement de la tige du boulon 211.

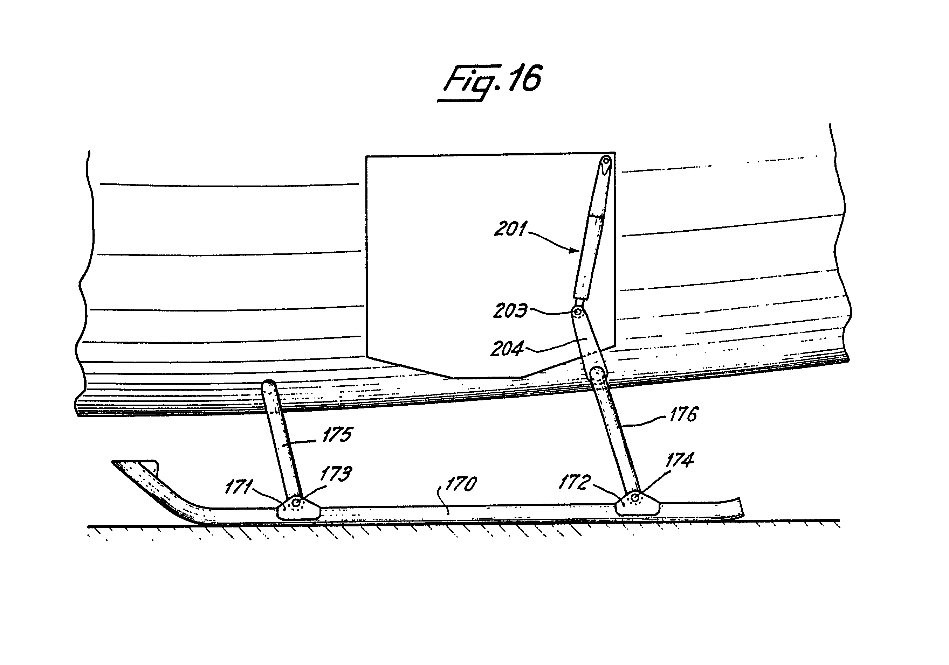

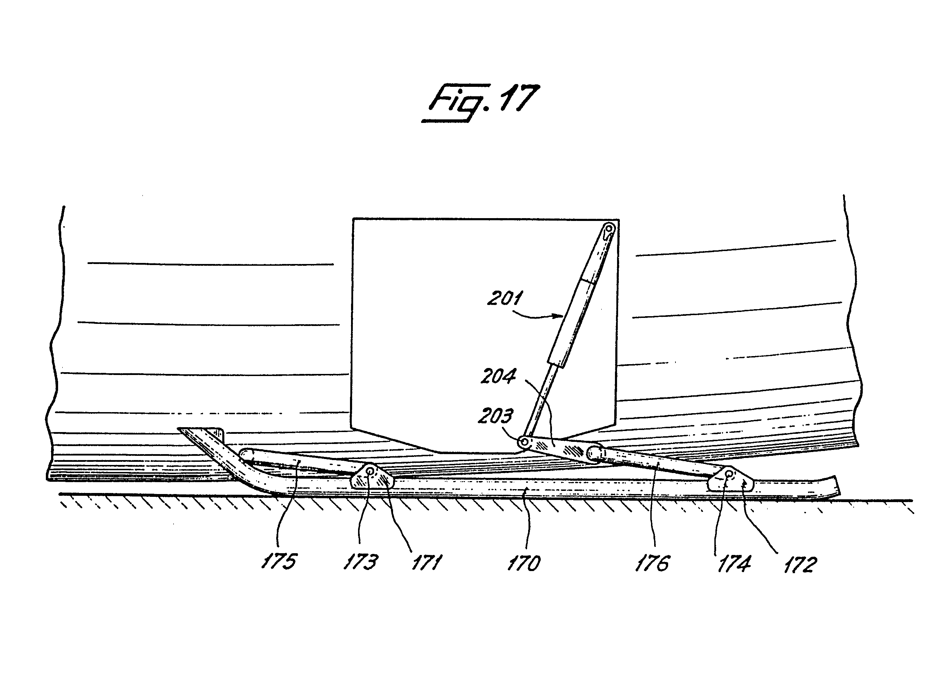

Les positions occupées par les différents éléments de ce train, lors d'un atterrissage normal ou avant le déclenchement du dispositif d'absorption d'énergie du composant 201 sont représentées sur la figure 16, et après le fonctionnement du dispositif «anti-crash» sur la figure 17. Si l'on compare les deux réalisations de trains décrits cidessus, qui fonctionnent selon le même principe, il apparaît que le composant 181 du premier exemple, articulé sur la traverse arrière 176, change avec elle d'orientation, de sorte que la direction de l'effort qui le sollicite varie au cours de la séquence de fonctionnement du dispositif d'absorption d'énergie. Dans le second exemple, la direction du composant 201 est peu modifiée, et ce dernier conserve toute son efficacité tant qu'il travaille. Mais le premier exemple de train présente l'avantage qu'une telle réalisation est facilement adaptable sur un hélicoptère déjà équipé d'un train à patins. Pour tenir les efforts d'un atterrissage anormal, seules les articulations (axes et pattes ou ferrures d'attache) doivent être renforcées car les efforts restent distribués à l'intérieur du train. Par contre, dans le second exemple, ces efforts sont transmis à la structure de l'hélicoptère, qui doit donc être calculée et dimensionnée pour résister à ces efforts.

Il faut donc prévoir des renforcements structuraux. De plus, dès la conception de l'hélicoptère, il faut prévoir un espace libre pour le logement des composants 201. Par contre, cette seconde solution n'augmente pas la traînée aérodynamique du train.

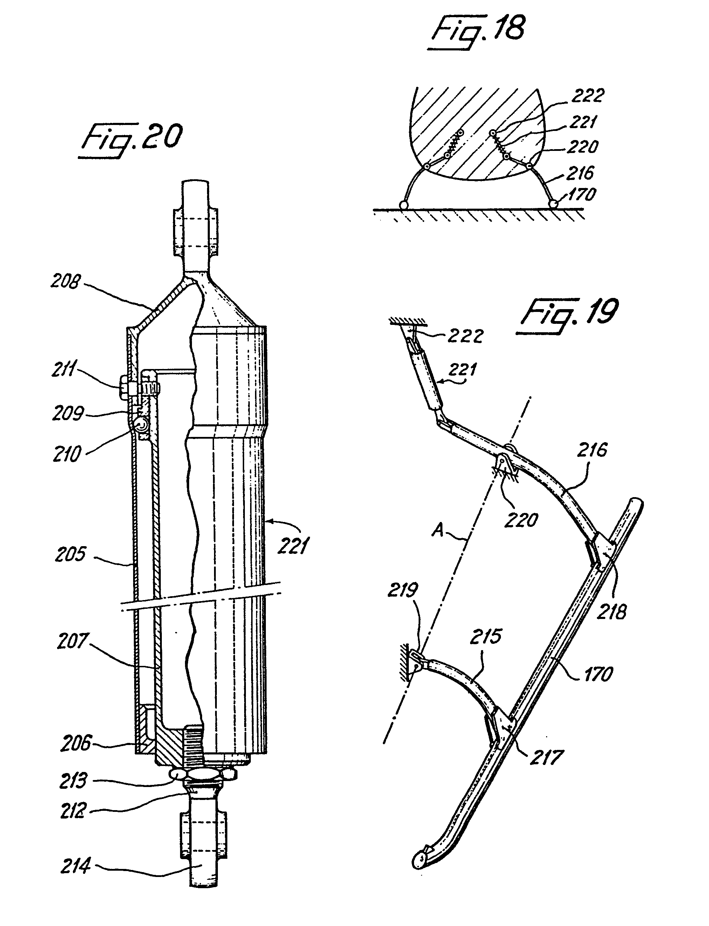

Le troisième exemple de réalisation, représenté sur les figures 18 et 19, fonctionne selon un autre principe. Les traverses avant 215 et arrière 216 sont des éléments tubulaires cintrés, les traverses arrière 216 étant plus longues que les traverses avant 215. Sur chaque atterrisseur, les deux traverses sont rigidement fixées par leur extrémité inférieure au patin tubulaire 170 par des pattes avant 217 et des pattes arrière 218 soudées ou boulonnées. Sur l'atterrisseur de gauche représenté sur la figure 19, la traverse avant 215 est montée pivotante par son extrémité supérieure autour d'un axe charnière A sur une ferrure d'attache structurale 219, alors que la traverse arrière 216 est également montée pivotante autour de l'axe charnière A sur une ferrure d'attache structurale 220, mais en un point qui est distant de son extrémité supérieure, par laquelle la traverse arrière 216 est montée pivotante autour d'un axe parallèle à l'axe charnière A sur l'extrémité inférieure d'un composant 221, lui-même monté pivotant par son extrémité supérieure, autour d'un axe parallèle à l'axe charnière A, sur une autre ferrure d'attache structurale 222.

L'atterrisseur ainsi réalisé est donc monté pour pouvoir effectuer un pivotement d'ensemble autour de l'axe charnière A, et son contreventement est assuré par le composant 221 à fonction essentiellement mécanique, et logé dans le fuselage de l'hélicoptère.

Le composant 221 qui équipe chacun des deux atterrisseurs est tout à fait semblable au composant 201 du second exemple de train décrit cidessus car il est comme lui sollicité en traction.

Ce composant 221 peut donc être une contrefiche selon la figure 7, ou un vérin selon les figures 1 à 3 ou encore un amortisseur ou un amortisseur-vérin, ou de préférence une contre-fiche telle que celle représentée en coupe sur la figure 20, dont la structure et le mode de fonctionnement sont très voisins de ceux de la contre-fiche représentée sur la figure 15, de sorte que les mêmes références sont utilisées pour repérer les mêmes éléments, et qu'il n'est pas utile de décrire à nouveau le fonctionnement du dispositif d'absorption d'énergie par déformation plastique dont ce composant 221 est muni.

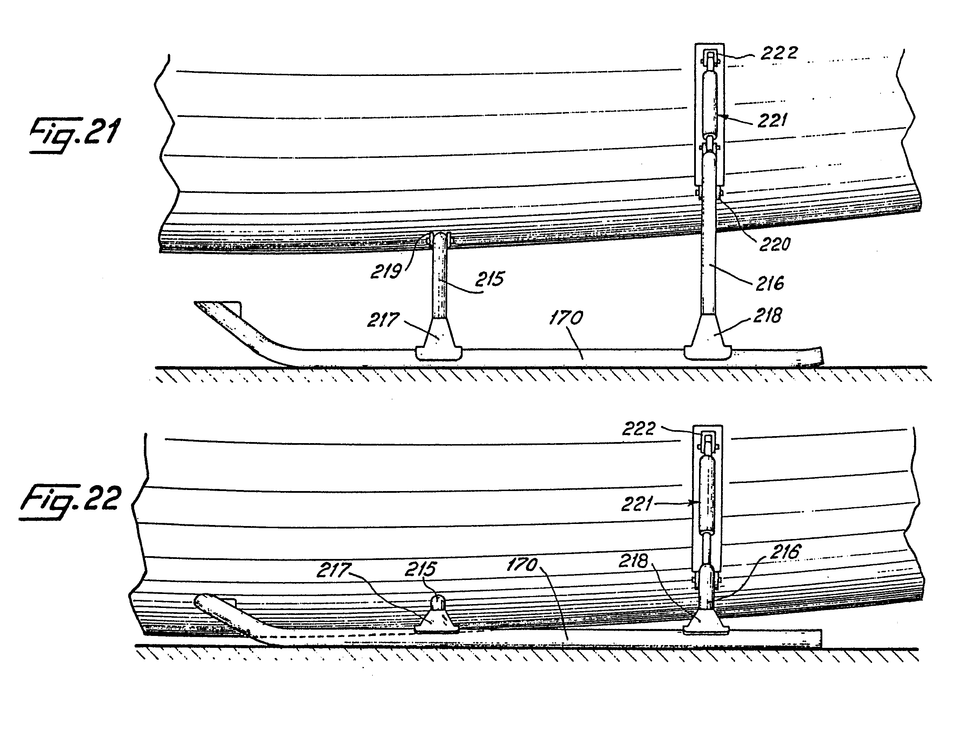

Dans cette réalisation, l'absorption d'énergie se fait uniquement par écartement des atterrisseurs l'un de l'autre, en raison de leur pivotement d'ensemble autour des axes charnières tels que A. Pour un atterrissage normal, cet écartement est suivi d'un retour en position initiale, en raison de la déformation élastique des traverses à concavité tournée vers le dessous du fuselage de l'hélicoptère, alors que pour un atterrissage anormal, le dispositif anti-crash est déclenché, comme cela est représenté sur les figures 21 et 22 respectivement. Dans ce troisième exemple, seuls le composant 221 et la traverse arrière 216 participent pratiquement à l'absorption d'énergie, et le composant 221 travaille dans de bonnes conditions.

Enfin, ce troisième exemple présente sensiblement les mêmes avantages et les mêmes inconvénients que le second exemple précédemment décrit en ce qui concerne la place requise dans le fuselage pour loger les composants 221, les renforcements structuraux nécessaires à leur fixation, et l'absence de traînée aérodynamique supplémentaire au niveau du train d'atterrissage.

**Revendications**

1. Train d'atterrissage à patins (170), destiné à équiper un aérodyne, en particulier un hélicoptère, et comprenant deux atterrisseurs fixés à la structure de l'aérodyne, et dont chacun comporte un patin (170) relié à ladite structure par deux traverses (175, 215; 176, 216) dont l'une (175, 215) est, pour chaque atterrisseur, articulée sur la structure autour d'un axe, au moins un dispositif (1, 2; 151, 154; 181, 201, 221) d'absorption d'énergie et/ou de limitation d'effort, étant relié d'une part, à une traverse (176, 216) de chaque atterrisseur, caractérisé en ce que l'autre traverse (176, 216) de chaque atterrisseur est également articulée sur la structure, autour d'un axe parallèle à l'axe d'articulation sur la structure de la première traverse de l'atterrisseur correspondant, le dispositif d'absorption d'énergie et/ou de limitation d'effort étant un dispositif mécanique à absorption d'énergie par déformation plastique qui est extérieur aux traverses et au patin de l'atterrisseur correspondant et qui est rattaché d'autre part, soit au patin (170) correspondant, soit à la structure de l'aérodyne.

2. Train d'atterrissage selon la revendication 1, caractérisé en ce que le dispositif d'absorption d'énergie par déformation plastique et/ou de limitation d'effort comprend, de façon en soi connue, des éléments de roulement, tels que des billes (197, 210) interposés avec serrage entre deux organes (184, 190, 205, 207) destinés à coulisser axialement l'un dans l'autre après rupture d'un élément frangible (199, 211) à charge de rupture prédéterminée, destiné à immobiliser les deux organes l'un par rapport à l'autre dans une position initiale, de sorte que les éléments de roulement provoquent une dissipation d'énergie par déformation plastique de l'un au moins (198, 205) des deux organes, lorsque l'effort axial supporté par le dispositif est supérieur à un seuil correspondant à la charge de rupture de l'élément frangible.

3. Train d'atterrissage selon l'une des revendications 1 et 2, caractérisé en ce que les deux traverses (215, 216) de chaque atterrisseur sont d'une part rigidement fixées par l'une de leur extrémité au patin (170) correspondant et d'autre part articulées sur la structure autour d'un axe charnière (A) commun, disposé vers l'autre atterrisseur par rapport au patin (170) correspondant, le composant muni d'un dispositif d'absorption d'énergie par déformation plastique et/ou de limitation d'effort (221) étant articulé sur la structure de l'aérodyne, par l'une de ses extrémités, et sur l'une des traverses (216) par son autre extrémité, et sollicité lorsque les atterrisseurs s'écartent l'un de l'autre par un pivotement d'ensemble de chacun d'eux autour de son axe charnière (A).

4. Train d'atterrissage selon la revendication 3, du type dont le patin de chaque atterrisseur est monté latéralement sous la structure de l'aérodyne, caractérisé en ce que l'une des traverses de chaque atterrisseur, qui constitue une traverse avant (215) est articulée par son autre extrémité autour de l'axe charnière (A), tandis que l'autre traverse, qui constitue une traverse arrière (216) est articulée, d'une part, par son autre extrémité sur l'extrémité correspondante du composant (21) muni d'un dispositif d'absorption d'énergie par déformation plastique et/ou de limitation d'effort, et d'autre part, en un point situé entre ses deux extrémités, autour de l'axe charnière (A), de sorte que ledit composant (221) est sollicité en traction lorsque les atterrisseurs s'écartent latéralement l'un de l'autre.

5. Train d'atterrissage selon la revendication 4, caractérisé en ce que les traverses (215, 216) sont des éléments tubulaires cintrés dont la concavité est tournée vers le dessous de la structure de l'aérodyne, et que les composants (221) munis d'un dispositif d'absorption d'énergie sont articulés par leur extrémité inférieure sur l'extrémité correspondante des traverses arrière (216) des atterrisseurs et par leur extrémité supérieure sur la structure de l'aérodyne.

6. Train d'atterrissage selon l'une des revendications 1 et 2, dont les deux traverses (175, 176) de chaque atterrisseur sont articulées sur le patin (170) correspondant autour d'axes parallèles entre eux, les efforts de contreventement de chaque atterrisseur étant repris par le composant (181, 201) muni d'un dispositif d'absorption d'énergie et qui est articulé lui-même autour d'axes parallèles aux axes d'articulation des traverses (175, 176), caractérisé en ce que chacune des deux traverses (175, 176) de chaque atterrisseur est articulée sur le patin (170) correspondant autour d'un seul axe parallèle aux axes d'articulation des traverses (175, 176) sur la structure de l'aérodyne, de manière à constituer avec le patin (170) sensiblement un parallélogramme déformable.

7. Train d'atterrissage selon la revendication 6, tel que sur chaque atterrisseur chaque composant (181) muni d'un dispositif d'absorption d'énergie est articulé entre le patin (170) correspondant et une traverse (175, 176), caractérisé en ce que le point d'articulation du composant (181) sur la traverse est situé entre les articulations de ladite traverse (175, 176) sur le patin (170) et sur la structure, respectivement.

8. Train selon la revendication 7, du type dont le patin (170) de chaque atterrisseur est monté latéralement sous le structure de l'aérodyne et relié à cette dernière par une traverse avant (175) et une traverse arrière (176), caractérisé en ce qu'il comprend, pour chaque atterrisseur, un seul composant (181) muni d'un dispositif d'absorption d'énergie et qui est articulé par son extrémité inférieure sur le patin (170) et par son extrémité supérieure sur la traverse arrière (176).

9. Train d'atterrissage selon la revendication 8, caractérisé en ce que, sur chaque atterrisseur, l'unique composant (181) muni d'un dispositif d'absorption d'énergie est articulé sur le patin (170) en un point (183, 182) situé entre les articulations (171, 173 et 172, 174) des deux traverses (175, 176) correspondantes sur ce patin (170), lesquelles sont légèrement décalées vers l'arrière par rapport aux articulations (179, 181) des traverses (175, 176) sur la structure, de sorte que ledit composant (181) est sollicité en compression.

10. Train d'atterrissage selon la revendication 6, caractérisé en ce que, sur chaque atterrisseur, chaque composant (201) muni d'un dispositif d'absorption d'énergie est articulé entre une traverse (176) et la structure de l'aérodyne (202).

11. Train d'atterrissage selon la revendication 10, caractérisé en ce que chaque composant (201) muni d'un dispositif d'absorption d'énergie est articulé sur un levier (204) solidaire de la traverse (176) à laquelle le composant est relié.

12. Train d'atterrissage selon la revendication 11, du type dont le patin (170) de chaque atterrisseur est monté latéralement sous la structure de l'aérodyne et relié à cette dernière par une traverse avant (175) et une traverse arrière (176), caractérisé en ce qu'il comprend pour chaque atterrisseur un seul composant (201) muni d'un dispositif d'absorption d'énergie qui est articulé sur le levier (204) solidaire de la traverse arrière (176) en un point situé du côté opposé à l'articulation de la traverse arrière (176) sur le patin (170) par rapport à l'articulation de la traverse arrière (176) sur la structure de l'aérodyne.

13. Train d'atterrissage selon l'une des revendications 6 à 12, caractérisé en ce que chacune des traverses (175, 176) d'un atterrisseur est solidaire de la traverse correspondante de l'autre atterrisseur par un tronçon rectiligne (177, 178) monté tourillonnant dans des ferrures (179, 180) de la structure de l'aérodyne.

## Patentansprüche

1. Kufenlandegestell für ein Luftfahrzeug, insbesondere für einen Hubschrauber, bestehend aus zwei am Körper des Luftfahrzeuges befestigten Fahrgestellen, von denen jedes mit einer Kufe (170) ausgerüstet ist, die an dem Luftfahrzeugkörper mit Hilfe von zwei Traversen (175, 215; 176, 216) angeordnet ist, von denen die eine (175, 215) – für jedes Fahrgestell – an dem Luftfahrzeugkörper um eine Achse schwenkbar angeordnet ist, wobei mindestens eine Einrichtung (1, 2; 151, 154; 181, 201, 221) zur Energieaufnahme oder zur Kraftbegrenzung vorgesehen ist, die einerseits mit einer Traverse (176, 216) jedes Fahrgestelles verbunden ist, dadurch gekennzeichnet, dass auch die andere Traverse (176, 216) jedes Fahrgestelles schwenkbar am Luftfahrzeugkörper um eine Achse angeordnet ist, die parallel zu der Schwenkachse der ersten Traverse des zugeordneten Fahrgestelles angeordnet ist, wobei die Einrichtung zur Energieaufnahme oder zur Kraftbegrenzung eine mechanische, durch plastische Deformation Energie aufnehmende Einrichtung ist, die ausserhalb der Traversen und der Kufe des zugeordneten Fahrgestelles liegt und andererseits entweder mit der zugeordneten Kufe (170) oder mit dem Luftfahrzeugkörper verbunden ist.

2. Kufenlandegestell nach Anspruch 1, dadurch gekennzeichnet, dass die die Energie durch plastische Deformation und/oder durch Kraftbegrenzung aufnehmende Einrichtung in an sich bekannter Weise mit Wälzelementen, wie Kugeln (197, 210), versehen ist, die zwischen zwei Teilen (184, 190, 205, 207) mit Klemmung eingesetzt sind, die dazu vorgesehen sind, sich axial ineinander zu verschieben, wenn ein Sollbruchelement (199, 211), das die beiden Teile in einer Anfangsstellung zueinander sichert, bricht, so dass die Wälzelemente eine Energievergeudung durch plastische Verformung mindestens eines (198, 205) der beiden Teile hervorrufen, sobald die auf die Einrichtung einwirkende Axialkraft grösser ist, als ein dem Sollbruchwert des Sollbruchelementes entsprechender Schwellwert.

3. Kufenlandegestell nach einem der Ansprüche 1 und 2, dadurch gekennzeichnet, dass die beiden Traversen (215, 216) jedes Fahrgestelles einerseits starr mit einem ihrer Enden an der zugeordneten Kufe (170) und andererseits schwenkbar am Flugkörper angeordnet sind, und zwar um eine gemeinsame Scharnierachse (A), die, bezogen auf die zugeordnete Kufe (170), zum anderen Fahrgestell hin verläuft, wobei die Anordnung mit einem Glied zur Aufnahme von Energie durch plastische Verformung und/oder durch Kraftbegrenzung (221) ausgerüstet ist, das schwenkbar am Flugkörper mit einem seiner Enden angeordnet ist, mit dem anderen Ende an einer der Traversen (216) angreift und beansprucht wird, sobald sich die Fahrgestelle durch eine Verschwenkung eines von ihnen um die jeweilige Scharnierachse (A) voneinander entfernen.

4. Kufenlandegestell nach Anspruch 3, bei dem die Kufe jedes Fahrgestelles seitlich unterhalb des Flugkörpers angeordnet ist, dadurch gekennzeichnet, dass die eine Traverse des Fahrgestelles, die die vordere Traverse (215) bildet, mit ihrem anderen Ende um die Scharnierachse (A) schwenkbar angeordnet ist, während die andere Traverse, die die hintere Traverse (216) bildet, einerseits mit ihrem anderen Ende an dem zugeordneten Ende des Gliedes angebracht ist, das mit der Einrichtung zur Energieaufnahme durch plastische Verformung und/oder durch Kraftbegrenzung versehen ist, und andererseits an einem zwischen ihren beiden Enden vorgesehenen Punkt um die Scharnierachse (A) schwenkbar gelagert ist, so dass das Glied (221) auf Zug beansprucht wird, wenn sich die Fahrgestelle gegeneinander seitlich auseinanderbewegen.

5. Kufenlandegestell nach Anspruch 4, dadurch gekennzeichnet, dass die Traversen (215, 216) aus gebogenen Rohren bestehen, deren Konkavität zum unteren Bereich des Flugkörpers gerichtet ist und dass die Glieder (221), die mit einer Einrichtung zur Energieaufnahme versehen sind, mit ihrem unteren Ende an dem zugeordneten Ende der hinteren Traverse (216) des Fahrgestelles und mit seinem oberen Ende am Flugkörper schwenkbar angelenkt sind.

6. Kufenlandegestell nach einem der Ansprüche 1 und 2, bei dem die beiden Traversen (175, 176) jedes Fahrgestelles schwenkbar an der zugeordneten Kufe (170) um unter sich parallele Achsen angeordnet sind und wobei die Querkräfte jedes Fahrgestelles durch das Glied (181, 201), das mit einer Energieaufnahmeeinrichtung versehen ist, aufgenommen werden, welches selbst um Achsen schwenkbar gelagert ist, die parallel zu den Schwenkachsen der Traversen (175, 176) verlaufen, dadurch gekennzeichnet, dass jede der beiden Traversen (175, 176) jedes Fahrgestelles an der zugeordneten Kufe (170) um eine einzige parallel zu den Schwenkachsen der Traversen (175, 176) am Flugkörper verlaufende Achse schwenkbar angeordnet ist, so dass mit der Kufe (170) im wesentlichen ein verformbares Parallelogramm gebildet wird.

7. Kufenlandegestell nach Anspruch 6, bei dem an jedem Fahrgestell, jedes mit der Energieaufnahmeeinrichtung versehene Glied (181) schwenkbar zwischen der Kufe (170) und einer Traverse (175, 176) angeordnet ist, dadurch gekennzeichnet, dass der Schwenkpunkt des Gliedes (181) an der Traverse zwischen den Schwenklagern der Traverse (175, 176) an der Kufe (170) und dem Flugkörper liegt.

8. Kufenlandegestell nach Anspruch 7, bei dem die Kufe (170) jedes Fahrgestelles seitlich unterhalb des Flugkörpers angeordnet ist und an diesem durch eine vordere Traverse (175) und eine hintere Traverse (176) angebracht ist, dadurch gekennzeichnet, dass an jedem Fahrgestell ein Glied (181) mit einer Energieaufnahmeeinrichtung vorgesehen ist, das mit seinem unteren Ende an der Kufe (170) und mit seinem oberen Ende an der hinteren Traverse (176) schwenkbar angelenkt ist.

9. Kufenlandegestell nach Anspruch 8, dadurch gekennzeichnet, dass an jedem Fahrgestell das eine mit der Energieaufnahmeeinrichtung versehene Glied (181) an der Kufe (170) in einem Punkt (183, 182) gelagert ist, der zwischen den Anlenkstellen (171, 173 und 172, 174) der beiden Traversen (175, 176) an der Kufe (170) liegt, wobei diese in bezug auf die Anlenkstellen (179, 180) der Traversen (175, 176) am Flugkörper leicht nach hinten versetzt sind, so dass das Glied (181) auf Druck beansprucht wird.

10. Kufenlandegestell nach Anspruch 6, dadurch gekennzeichnet, dass an jedem Fahrgestell jedes mit der Energieaufnahmeeinrichtung versehene Glied (201) zwischen einer Traverse (176) und dem Flugkörper (202) schwenkbar angelenkt ist.

11. Kufenlandegestell nach Anspruch 10, dadurch gekennzeichnet, dass jedes mit der Energieaufnahmeeinrichtung versehene Glied (201) an einem Hebel (204) schwenkbar angelenkt ist, der fest an der Traverse (176) angebracht ist, mit der das Glied verbunden ist.

12. Kufenlandegestell nach Anspruch 11, bei dem die Kufe (170) jedes Fahrgestelles seitlich unterhalb des Flugkörpers angeordnet und mit diesem durch eine vordere Traverse (175) und eine hintere Traverse (176) verbunden ist, dadurch gekennzeichnet, dass an jedem Fahrgestell ein einziges, mit einer Energieaufnahmeeinrichtung versehenes Glied (201) vorgesehen ist, das an dem Hebel (204), der fest an der hinteren Traverse (176) angeordnet ist, in einem Punkt schwenkbar angelenkt ist, der in bezug auf die Anlenkung der hinteren Traverse (176) am Flugkörper auf der entgegengesetzten Seite von der Anlenkstelle der hinteren Traverse (176) an der Kufe (170) liegt.

13. Kufenlandegestell nach einem der Ansprüche 6 bis 12, dadurch gekennzeichnet, dass jede Traverse (175, 176) eines Fahrgestelles fest mit einer zugeordneten Traverse des anderen Fahrgestelles über ein gerades Wellenstück (177, 178) verbunden ist, das drehbar in Beschlägen (179, 180) am Flugkörper gelagert ist.

## Claims

1. Skid (170) landing gear to be fitted to an aerodyne, especially a helicopter, and comprising two undercarriage parts which are fixed to the structure of the aerodyne and each of which has a skid (170) connected to the said structure by two crosspieces (175, 215; 176, 216), one (175, 215) of which is, for each undercarriage part, hinged on the structure about an axis, and at least one device (1, 2; 151, 154; 181, 201, 221) for absorbing energy and/or for limiting stress which is connected, on the one hand, to a crosspiece (176, 216) of each undercarriage part, characterised in that the other crosspiece (176, 216) of each undercarriage part is also hinged on the structure about an axis parallel to the hinge axis on the structure of the first crosspiece of the corresponding undercarriage part, the device for absorbing energy and/or for limiting stress being a mechanical device for absorbing energy by plastic deformation which is exterior to the crosspieces and the skid of the corresponding undercarriage part and which is attached, on the other hand, either to the corresponding skid (170) or to the structure of the aerodyne.

2. Landing gear according to claim 1, characterised in that the device for absorbing energy by plastic deformation and/or for limiting stress comprises, in a manner known per se, rolling elements, such as balls (197, 210), interposed with squeezing between two members (184, 190, 205, 207) that are to slide axially one inside the other after rupture of a breakable element (199, 211) having a predetermined breaking strength which immobilises the two members with respect to one another in an initial position, so that the rolling elements cause a dissipation of energy by plastic deformation of at least one (198, 205) of the two members when the axial force applied to the device is greater than a threshold corresponding to the breaking strength of the breakable element.

3. Landing gear according to one of claims 1 and 2, characterised in that the two crosspieces (215, 216) of each undercarriage part are, on the one hand, rigidly fixed by one of their ends to the corresponding skid (170) and, on the other hand, hinged on the structure about a common hinge axis (A) which is located nearer to the other undercarriage part than is the corresponding skid (170), the component provided with a device for absorbing energy by plastic deformation and/or for limiting stress (221) being hinged on the structure of the aerodyne by one of its ends and on one of the crosspieces (216) by its other end and being stressed when the undercarriage parts separate one from the other by a pivoting movement of each of them as a unit about its hinge axis (A).

4. Landing gear according to claim 3, of the type in which the skid of each undercarriage part is mounted to one side under the structure of the aerodyne, characterised in that one of the crosspieces of each undercarriage part, which forms a front crosspiece (215), is hinged by its other end about the hinge axis (A) while the other crosspiece, which forms a rear crosspiece (216), is hinged, on the one hand, by its other end on the corresponding end of the component (21) provided with a device for absorbing energy by plastic deformation and/or for limiting stress and, on the other hand, at a point located between its two ends, about the hinge axis (A) so that the said component (221) is stressed in tension when the undercarriage parts separate laterally one from the other.

5. Landing gear according to claim 4, characterised in that the crosspieces (215, 216) are curved tubular elements the concavity of which is turned towards the underside of the structure of the aerodyne, and the components (221) provided with a device for absorbing energy are hinged by their lower ends on the corresponding ends of the rear crosspieces (216) of the undercarriage parts and by their upper ends on the structure of the aerodyne.

6. Landing gear according to one of claims 1 and 2, in which the two crosspieces (175, 176) of each undercarriage part are hinged on the corresponding skid (170) about axes that are parallel to one another, the cross-bracing stresses of each undercarriage part being taken up by the component (181, 201) which is provided with a device for absorbing energy and which is itself hinged about axes parallel to the hinge axes of the crosspieces (175, 176), characterised in that each of the two crosspieces (175, 176) of each undercarriage part is hinged on the corresponding skid (170) about a single axis parallel to the hinge axes of the crosspieces (175, 176) on the structure of the aerodyne, in such a manner as to form with the skid (170) approximately a deformable parallelogram.

7. Landing gear according to claim 6, such that, on each undercarriage part, each component (181) provided with a device for absorbing energy is hinged between the corresponding skid (170) and one crosspiece (175, 176), characterised in that the hinge point of the component (181) on the crosspiece is located between the hinges of the said crosspiece (175, 176) on the skid (170) and on the structure, respectively.

8. Gear according to claim 7, of the type in which the skid (170) of each undercarriage part is mounted to one side under the structure of the aerodyne and is connected to the structure by a front crosspiece (175) and a rear crosspiece (176), characterised in that it comprises, for each undercarriage part, a single component (181) which is provided with a device for absorbing energy and is hinged by its lower end on the skid (170) and by its upper end on the rear cross-piece (176).

9. Landing gear according to claim 8, characterised in that, on each undercarriage part, the single component (181) provided with a device for absorbing energy is hinged on the skid (170) at a point (183, 182) located between the hinges (171, 173 and 172, 174) of the two corresponding crosspieces (175, 176) on this skid (170), which hinges are set back slightly with respect to the hinges (179, 181) of the crosspieces (175, 176) on the structure, so that the said component (181) is stressed in compression.

10. Landing gear according to claim 6, characterised in that, on each undercarriage part, each component (201) provided with a device for absorbing energy is hinged between one crosspiece (176) and the structure of the aerodyne (202).

11. Landing gear according to claim 10, characterised in that each component (201) provided with a device for absorbing energy is hinged on a lever (204) fixedly connected to the crosspiece (176) to which the component is connected.

12. Landing gear according to claim 11, of the type in which the skid (170) of each undercarriage part is mounted to one side under the structure of the aerodyne and is connected to the structure by a front crosspiece (175) and a rear crosspiece (176), characterised in that it comprises, for each undercarriage part, a single component (201) which is provided with a device for absorbing energy and which is hinged on the lever (204) which is fixedly connected to the rear crosspiece (176) at a point located at the other side of the hinge of the rear crosspiece (176) on the structure of the aerodyne from the hinge of the rear crosspiece (176) on the skid (170).

13. Landing gear according to one of claims 6 to 12, characterised in that each of the crosspieces (175, 176) of an undercarriage part is fixedly connected to the corresponding crosspiece of the other undercarriage part by a rectilinear section (177, 178) rotatably mounted in mountings (179, 180) on the structure of the aerodyne.

Fig.1

Fig.2

Fig.3

Fig.4

Fig.5

Fig.6

Fig.7

Fig.9

Fig.10

Fig.8

Fig.11

Fig.12

*Fig.13*

*Fig.15*

*Fig.14*

# Fig.16

*Fig.17*

201

204

203

175    173    171    170    176    174    172

0 113616

_Fig._ 18

_Fig._ 20

_Fig._ 19

Fig.21

Fig.22

0 113 616